# EUROPÄISCHE PATENTANMELDUNG

(11) **EP 4 180 407 A1**
(43) Veröffentlichungstag der Anmeldung: **17.05.2023**
(21) Anmeldenummer: 22206546.8
(22) Anmeldetag: 10.11.2022
(51) Int. Cl.: C04B 37/00

(54) **FASERKERAMIK-DÜSE, VERWENDUNG EINER FASERKERAMIK-DÜSE, VERFAHREN ZUR HERSTELLUNG EINER FASERKERAMIK-DÜSE, UND SCHUBKAMMER**

(30) Priorität: 15.11.2021 DE 102021129747
(71) Anmelder: Deutsches Zentrum für Luft- und Raumfahrt e.V., 53227 Bonn (DE); Arceon B.V., 2627 AN Delft (NL)
(72) Erfinder: Heidenreich, Bernhard, 53227 Bonn (DE); Rahul, Shirke, 2627 Delft (NL); Rahul, Sharma, 2627 Delft (NL)
(74) Vertreter: Hoeger, Stellrecht & Partner Patentanwälte mbB

(57) **Zusammenfassung**

Die Erfindung betrifft eine Faserkeramik-Düse, umfassend mindestens ein erstes Segment (32) aus einem ersten keramischen Faserverbundwerkstoff und ein zweites Segment (34) aus einem zweiten keramischen Faserverbundwerkstoff, und eine Fügeverbindungseinrichtung (44), mittels welcher das erste Segment (32) und das zweite Segment (34) stoffschlüssig miteinander verbunden sind.

## Beschreibung

Die Erfindung betrifft eine Faserkeramik-Düse.

Die Erfindung betrifft weiterhin die Verwendung einer Faserkeramik-Düse.

Die Erfindung betrifft ferner ein Verfahren zur Herstellung einer Faserkeramik-Düse.

Weiterhin betrifft die Erfindung eine Schubkammer.

Die US 2013/0001321 A1 offenbart einen Auspuff mit einer Wand aus einem ersten Kompositmaterial mit einem ersten Wärmeausdehnungskoeffizienten und einem zweiten Kompositmaterial mit einem zweiten Wärmeausdehnungskoeffizienten, wobei der zweite Wärmeausdehnungskoeffizient kleiner ist als der erste Wärmeausdehnungskoeffizient.

Die US 2016/0376893 A1 offenbart ein Verfahren zum Ersetzen eines Teils einer Gasturbinenkomponente.

Die DE 10 2008 020 198 A1 offenbart eine Düsenerweiterung für ein Triebwerk.

Die DE 199 01 215 A1 offenbart eine Scheibenbremse.

Die EP 1 234 119 B1 offenbart eine segmentierte Drosselvorrichtung.

Die US 2,699,036 offenbart eine Keramikhülle-Raketenmotorstruktur.

Die US 2015/0204274 A1 offenbart ein Herstellungsverfahren für eine Raketenmotordüse.

Die EP 3 371 446 B1 offenbart einen Raketenmotor.

Der Erfindung liegt die Aufgabe zugrunde, eine Faserkeramik-Düse der eingangs genannten Art bereitzustellen, welche auf einfache Weise herstellbar ist und bei der eine verringerte Delaminationsgefahr vorliegt.

Diese Aufgabe wird bei der eingangs genannten Faserkeramik-Düse erfindungsgemäß dadurch gelöst, dass mindestens ein erstes Segment aus einem ersten keramischen Faserverbundwerkstoff und ein zweites Segment aus einem zweiten keramischen Faserverbundwerkstoff vorgesehen sind, und dass eine Fügeverbindungseinrichtung vorgesehen ist, mittels welcher das erste Segment und das zweite Segment stoffschlüssig miteinander verbunden sind.

Erfindungsgemäß wird eine Faserkeramik-Düse mit einer Mehrzahl von Segmenten bereitgestellt, wobei benachbarte Segmente stoffschlüssig (über eine keramisierte Fügepastenverbindung) und gegebenenfalls zusätzlich durch Formschluss verbunden sind. Es lässt sich dadurch eine delaminationsfreie CMC-Düsenstruktur bereitstellen, das heißt es lässt sich eine delaminationsfreie Faserkeramik-Düse mit Faserverstärkung bereitstellen.

Die Fügeverbindungseinrichtung sorgt für die Fügeverbindung der Segmente und kann als die Fügeverbindung als solche angesehen werden.

Durch die mehrsegmentige Ausbildung lassen sich die Werkstoffeigenschaften an jeweiligen Bereichen der Faserkeramik-Düse an die in Strömungsrichtung unterschiedlichen mechanischen, thermischen und abrasiven Lasten der Faserkeramik-Düse anpassen.

Insbesondere ist es dadurch möglich, die Düsenkontur in mindestens zwei Einzelsegmente mit einfach-konischer Struktur aufzuteilen. Die entsprechenden Vorkörper für die Segmente werden getrennt hergestellt und pyrolysiert. Fügebereiche und insbesondere Fügeflächen werden mit geeigneter Passung hergestellt und gegebenenfalls an dem C-Vorkörper mechanisch bearbeitet wie beispielsweise durch Rundschleifen und Fräsen. Es wird eine Verbindung mittels Fügepaste hergestellt. Nach dem Härten der Fügepaste wird dann die Kombination gegebenenfalls mit einem oder mehreren zusätzlichen Fügeelementen in einem Stück keramisiert und dabei insbesondere siliciert. Es kann dann vorgesehen sein, dass noch die Innenkontur der Düse und die Passfläche insbesondere zur Anbindung an eine Brennkammer mechanisch bearbeitet werden.

Bei der erfindungsgemäßen Lösung ist es möglich, bei der Herstellung einfach-konische Kerne beispielsweise mit zylindrischen Ausläufen zu verwenden. Dadurch kann der Wickelwinkel bzw. der Faserwinkel in einem größeren Bereich variiert werden, als wenn beispielsweise ein doppel-konischer Kern verwendet werden muss. Dies wiederum ermöglicht eine bessere Anpassung an die mechanischen Lasten der Faserkeramik-Düse. Weiterhin kann auch durch Variation eines Wickelwinkels in axialer Richtung ein Unterschied von Wandstärken zwischen großen und kleinen Durchmesserbereichen verringert werden. Es lässt sich dadurch die Faserkeramik-Düse mit einheitlicher Wandstärke berücksichtigen.

Wenn entsprechende zylindrische Ausläufer verwendet werden, dann muss grundsätzlich auch der Übergang zwischen einem konvergenten Düsenbereich und einem divergenten Düsenbereich bezüglich der Wandstärke nicht berücksichtigt werden.

Grundsätzlich ist der Aufbau eines Laminats aus 2D-Gewebezuschnitten bei einfach-konischen Geometrien einfacher als bei doppelt-konischen Konturen. Bei der erfindungsgemäßen Lösung lassen sich getrennte C-Vorkörper für unterschiedliche Konusbereiche herstellen. Es lassen sich dadurch insbesondere trapezförmige Zuschnitte für einfach-konische Geometrien verwenden, welche einfacher herstellbar sind als doppel-trapezförmige Zuschnitte. Weiterhin kann bei der erfindungsgemäßen Lösung die Anzahl der Zuschnitte reduziert werden. Dadurch wiederum kann die Größe der Zuschnitte erhöht werden. Dies erleichtert die Handhabbarkeit der Zuschnitte und auch den Laminiervorgang. Die Positionstoleranzen bei einfach-trapezförmigen Zuschnitten auf einfach-konischen Kernen sind größer und erleichtern den Laminiervorgang im Vergleich zu dem Falle, dass gewissermaßen zusammen ein Doppelkonus hergestellt werden muss. Bei doppel-trapezförmigen Zuschnitten ist eine hohe Positionsgenauigkeit in axialer Richtung erforderlich. Durch die erfindungsgemäße Lösung erleichtert sich grundsätzlich die Herstellbarkeit.

Weiterhin ist es auch möglich, einfach-konische Kerne mit geflochtenen oder gestrickten Faserpreformen zu belegen. Durch axiale Zugkräfte spannt sich Faserhalbzeug auf den Kern und nimmt dessen Kontur an. Bei doppelkonischen Kernen ist dies in der Regel nicht möglich. Auch dies erleichtert die Herstellung.

Weiterhin kann bei der erfindungsgemäßen Lösung bei der getrennten Herstellung von C-Vorkörpern für entsprechende Segmente ein Kern bzw. eine Außenform einteilig ausgeführt werden. Dadurch ergibt sich eine leichtere Trennung vom Kern und einer eventuell vorhandenen Außenform. Insbesondere müssen keine Hinterschnitte oder dergleichen vorgesehen werden.

Weiterhin kann durch die Aufteilung auf getrennte C-Vorkörper und damit auf einfach-konische Bereiche eine Kurzfaserverstärkung durchgeführt werden mit Fasern (C-Fasern und/oder SiC-Fasern), welche insbesondere eine Länge im Bereich zwischen 2 mm und 40 mm haben. Dadurch wiederum ist eine Herstellung über Warmpressung möglich. Es können dabei dann Wandstärken beliebig definiert werden, und Wandstärken können in axialer Richtung an Betriebslasten besser angepasst werden.

Durch die entsprechende resultierende 3D-Faserarchitektur bei der Verwendung von Kurzfasern können entsprechende kurzfaserverstärkte C-Vorkörper delaminationsfrei pyrolysiert werden. Es können höhere Aufheizraten und kürzere Prozesszeiten realisiert werden, im Vergleich zu gewickelten oder laminierten faserverstärkten Vorkörpern.

Neben Kurzfasern sind auch kleine Gewebezuschnitte oder Prepregzuschnitte bei der erfindungsgemäßen Lösung möglich, welche insbesondere eine Breite kleiner 20 mm² aufweisen. Insbesondere ist eine Verwendung von entsprechenden Zuschnitten im Bereich zwischen 2 mm x 2 mm bis ca. 40 mm x 40 mm und bevorzugt zwischen 10 mm x 10 mm und 20 mm x 20 mm vorgesehen. Es ergibt sich dadurch ein leichteres Einfüllen, eine homogenere Faserverteilung und auch Harzverteilung bei der Herstellung. Dies wiederum ergibt eine homogenere Phasenverteilung in dem hergestellten Segment und insbesondere C/C-SiC-Segment. Weiterhin ergibt sich grundsätzlich eine höhere thermische Beständigkeit und höhere Thermoschockbeständigkeit bei einer 3D-Faserarchitektur mit Kurzfasern bzw. mit relativ kleinen Gewebeabschnitten im Vergleich zu gewickelten oder laminierten Bauteilen.

Wenn bei der Herstellung eines C-Vorkörpers flexible Gegenformen wie zum Beispiel Folien verwendet werden, ist aufgrund der Auftrennung in unterschiedliche C-Vorkörper eine gleichmäßige Druckaufbringung auf der gesamten Bauteiloberfläche möglich. Die Faltenbildung wird beispielsweise gegenüber einer doppelt-konischen Bauweise insbesondere im Bereich des Düsenhalses deutlich reduziert.

Es sind auch nicht mehr speziell hergestellte flexible Gegenformen notwendig.

Durch die erfindungsgemäße Faserkeramik-Düse mit einer Mehrzahl von Segmenten, welche stoffschlüssig miteinander verbunden sind, lässt sich der Wandstärkenunterschied zwischen kleinen und großen Durchmessern bei der Faserkeramik-Düse verringern. Beispielsweise ermöglicht ein zylindrischer Übergang zwischen einem konvergenten Düsenbereich und dem divergenten Düsenbereich eine zuverlässige Komprimierung von Laminat bei der Herstellung. Dies führt zu einer geringeren Schrumpfbehinderung der Faserarchitektur als bei einer doppeltkonischen Herstellungsweise, bei der der konvergente Düsenbereich und der divergente Düsenbereich bereits in der C-Vorkörperphase zusammen an einem Vorkörper hergestellt werden. Insgesamt ergibt sich eine geringere Schrumpfbehinderung in radialer Richtung, und es können dadurch die Laminationen in radialer Richtung senkrecht zu einer Achse minimiert werden.

Durch die in-situ-Fügetechnik über Fügepaste mit anschließender Aushärtung und Keramisierung lassen sich selbsttragende, dünnwandige Düsenstrukturen herstellen, die ohne äußere Haltestrukturen eingesetzt werden können. Durch die mechanische Bearbeitung einer Innenkontur nach dem Fügen der Segmente und der Keramisierung entsteht eine strömungstechnisch ideale Oberfläche ohne Stufen und Absätze.

In einem Düsenhals, welcher grundsätzlich abrasiv und thermisch hoch beansprucht ist, lassen sich zusätzliche Elemente wie ein Fügeelement einbringen. Dieses Fügeelement wird mit hoher Verschleißbeständigkeit hergestellt wie beispielsweise aus einem C/C-SiC-Werkstoff mit hohem Konvertierungsgrad und mit hohem SiC-Gehalt (das heißt mit hohem keramischen Gehalt). Grundsätzlich lassen sich auch monolithische Keramiken und Metalle einbringen. Die Einbringung kann auch grundsätzlich formschlüssig erfolgen.

Insbesondere ist es vorgesehen, dass das erste Segment und das zweite Segment an Fügebereichen der Fügeverbindungseinrichtung verbunden sind, welche keramisiert sind, insbesondere mit mindestens einem der Folgenden:
- ein Fügebereich ist mittels Fügepaste an korrespondierenden Fügeflächen hergestellt;
- ein Fügebereich ist mittels Presspassung an korrespondierenden Fügeflächen und Keramisierung hergestellt;
- eine Fügefläche des ersten Segments und eine Fügefläche des zweiten Segments ist eben ausgebildet;
- das erste Segment und das zweite Segment weisen jeweils mindestens zwei Fügeflächen auf.

Es ist dadurch eine in-situ-Verbindung und dabei Fügeverbindung zwischen dem ersten Segment und dem zweiten Segment hergestellt.

Ein Fügebereich kann mittels Fügepaste an korrespondierenden Fügeflächen hergestellt sein. Fügepaste ist in der Regel ein Harz wie Phenolharz, welchem gegebenenfalls noch (elementarer) Kohlenstoff zugemischt sein kann. Korrespondierende Fügebereiche werden einseitig oder zweiseitig mit Fügepaste bestrichen und aufeinandergedrückt. Nach Aushärtung der Fügepaste kann dann die Keramisierung und insbesondere Silicierung erfolgen. Die Fügung in der hergestellten Faserkeramik-Düse erfolgt nicht direkt über die Fügepaste. Die Fügepaste stellt Kohlenstoff für die Keramisierung (Carbidbildung) bereit. Während der Silicierung erfolgt beim Hochheizen an der Fügepaste eine Umwandlung in Kohlenstoff; an dem Polymer des Harzes entsteht Kohlenstoff. Durch die Reaktion mit Silicium entsteht Siliciumcarbid, wobei auch noch eine freie Kohlenstoffphase verbleiben kann. Die Fügepaste ist in diesem Sinne kein Klebstoff, sondern ist ein C-Precursor, welcher Kohlenstoff für die Carbidbildung zur stoffschlüssigen Verbindung bereitstellt.

Es ist grundsätzlich alternativ auch möglich, dass eine Presspassung an Vorkörpern (faserverstärkten C-Vorkörper) durchgeführt wird und anschließend eine Keramisierung durchgeführt wird. An den Fügebereichen erfolgt dann eine stoffschlüssige Verbindung über Carbidbildung und insbesondere SiC-Bildung. Bei dieser Ausführungsform wird keine Fügepaste verwendet.

Durch ebene Ausbildung der Fügeflächen lässt sich eine einfache Verbindung erreichen. Es ist dabei grundsätzlich so, dass die Fügeflächen an C-Vorkörpern bei der Herstellung von Segmenten vorliegen. In der hergestellten Faserkeramik-Düse sind zumindest makroskopisch in der Regel diese Fügeflächen nicht mehr sichtbar. Durch eine mikroskopische Analyse wie beispielsweise REM-Aufnahmen lassen sich jedoch solche Fügeflächen auch in der hergestellten Struktur grundsätzlich identifizieren.

Ganz besonders vorteilhaft ist es, wenn das erste Segment und das zweite Segment jeweils mindestens zwei Fügeflächen aufweisen. Dadurch lässt sich eine stabile Verbindung erreichen.

Bei einer vorteilhaften Ausführungsform umfasst die Fügeverbindungseinrichtung an dem ersten Segment mindestens eine erste Fügefläche und eine zweite Fügefläche, wobei die erste Fügefläche quer und insbesondere senkrecht zu der zweiten Fügefläche orientiert ist, und die Fügeverbindungseinrichtung umfasst an dem zweiten Segment mindestens eine erste Fügefläche und eine zweite Fügefläche, wobei die erste Fügefläche quer und insbesondere senkrecht zu der zweiten Fügefläche orientiert ist. Dadurch lässt sich eine sichere Verbindung erreichen. Grundsätzlich kann zusätzlich gegebenenfalls auch noch ein Formschluss vorgesehen werden.

Weiterhin ist es günstig, wenn mindestens eines der Folgenden vorliegt:
- die erste Fügefläche an dem ersten Segment ist bezogen auf eine Achse des ersten Segments eine Zylindermantelfläche oder eine Konusmantelfläche;
- die zweite Fügefläche an dem ersten Segment ist quer und insbesondere senkrecht zu einer Achse des ersten Segments;
- die erste Fügefläche an dem zweiten Segment ist bezogen auf eine Achse des zweiten Segments eine Zylindermantelfläche oder eine Konusmantelfläche;
- die zweite Fügefläche an dem zweiten Segment ist quer und insbesondere senkrecht zu einer Achse des zweiten Segments;
- die erste Fügefläche an dem ersten Segment und die erste Fügefläche an dem zweiten Segment sind parallel und/oder fluchtend zueinander;
- die zweite Fügefläche an dem ersten Segment und die zweite Fügefläche an dem zweiten Segment sind parallel und/oder fluchtend zueinander.

Wenn die erste Fügefläche an dem ersten Segment eine Konusmantelfläche ist (und entsprechend auch die erste Fügefläche an dem zweiten Segment eine Konusmantelfläche), dann lässt sich bei entsprechenden Fügeflächen an C-Vorkörpern bei der Herstellung der Segmente als Konusmantelflächen eine sichere Verbindung erreichen. Ein Vorteil einer konischen Fügefläche liegt darin, dass ein Fügespalt bzw. eine Fügepastendicke beim Fügen gezielt eingestellt werden kann, insbesondere im Bereich zwischen größer 0 und 0,1 mm. Die Einstellung eines Fügespalts bei zylindrischen Fügeflächen ergibt sich in der Regel aus der Genauigkeit der Bearbeitung. Bei einer konischen Fügefläche ist eine gezieltere Einstellung möglich.

Durch die genannten geometrischen Ausbildungen lässt sich eine sichere Fügeverbindung in mehreren Richtungen erreichen.

Aus den gleichen Gründen ist es günstig, wenn:
- das erste Segment eine dritte Fügefläche aufweist, welche parallel zu der ersten Fügefläche oder zweiten Fügefläche des ersten Segments ist;
- das zweite Segment eine dritte Fügefläche aufweist, welche parallel zu der ersten Fügefläche oder zweiten Fügefläche des zweiten Segments ist;
- das erste Segment eine vierte Fügefläche aufweist, welche parallel zu der ersten Fügefläche oder zweiten Fügefläche des ersten Segments ist;
- das zweite Segment eine vierte Fügefläche aufweist, welche parallel zu der ersten Fügefläche oder zweiten Fügefläche des zweiten Segments ist;
- das erste Segment eine fünfte Fügefläche aufweist, welche parallel zu der ersten Fügefläche oder zweiten Fügefläche des ersten Segments ist;
- das zweite Segment eine fünfte Fügefläche aufweist, welche parallel zu der ersten Fügefläche oder zweiten Fügefläche des zweiten Segments ist.

Durch mehr als zwei Fügeflächen und insbesondere durch das Vorsehen einer dritten Fügefläche, gegebenenfalls zusätzlich einer vierten Fügefläche und so weiter, lässt sich eine sichere Verbindung erreichen. Beispielsweise ist es dadurch auch möglich, zusätzlich zu einer direkten Verbindung zwischen dem ersten Segment und dem zweiten Segment über ein oder mehrere Fügeelemente, welche zusätzliche Elemente sind, eine zusätzliche Verbindung zu erreichen.

Ganz besonders vorteilhaft ist es, wenn eine Fügefläche an dem ersten Segment eine Ringform hat, und eine Fügefläche an dem zweiten Segment eine Ringform hat. Durch eine entsprechende Ring-Ausbildung ergibt sich eine sichere Verbindung über einen gesamten Umfangsbereich. Die Ringform kann dabei grundsätzlich rotationssymmetrisch zu einer Achse sein. Es ist grundsätzlich auch möglich, eine ringförmige vieleckige Fügefläche vorzusehen.

Es ist insbesondere vorgesehen, dass das erste Segment und das zweite Segment an jeweiligen Fügeflächen direkt stoffschlüssig miteinander verbunden sind. Es ist dabei möglich, dass ausschließlich eine solche direkte stoffschlüssige Verbindung vorliegt, oder zusätzlich zu einer direkten stoffschlüssigen Verbindung eine indirekte stoffschlüssige Verbindung über ein oder mehrere Fügeelemente vorliegt.

Insbesondere ist mindestens eines der Folgenden vorgesehen:
- das erste Segment ist mit einer ersten Stufe versehen und das zweite Segment ist mit einer zweiten Stufe versehen, welche an die erste Stufe angepasst ist, und das erste Segment und das zweite Segment sind an der ersten Stufe und der zweiten Stufe stoffschlüssig miteinander verbunden;
- das erste Segment ist mit einem Teilbereich in das zweite Segment eingetaucht oder das zweite Segment ist mit einem Teilbereich in das erste Segment eingetaucht.

Wenn das erste Segment mit einem Teilbereich in das zweite Segment eingetaucht ist bzw. die kinematische Umkehr vorgesehen ist, ergibt sich eine sichere Verbindung. Es ergibt sich eine einfache Herstellbarkeit. Es kann dadurch an dem ersten Segment und dem zweiten Segment ein zylindrischer Ausläufer vorgesehen werden, welcher insbesondere eine einfache Herstellbarkeit eines Übergangs zwischen einem konvergenten Düsenbereich und einem divergenten Düsenbereich ermöglicht.

Durch das Vorsehen von Stufen lässt sich ein großer Verbindungsbereich bereitstellen. Ferner lässt sich zusätzlich eine formschlüssige Verbindung zwischen dem ersten Segment und dem zweiten Segment erreichen. Die formschlüssige Verbindung lässt sich insbesondere bezüglich einer Hauptströmungsrichtung erreichen.

Bei einer vorteilhaften Ausführungsform umfasst die Fügeverbindungseinrichtung mindestens ein Fügeelement, welches ein von dem ersten Segment und dem zweiten Segment getrenntes Element ist, welches stoffschlüssig mit dem ersten Segment verbunden ist und welches stoffschlüssig mit dem zweiten Segment verbunden ist, wobei insbesondere das erste Segment und das zweite Segment zusätzlich über jeweilige Fügeflächen direkt stoffschlüssig miteinander verbunden sind.

Durch das Vorsehen mindestens eines Fügeelements lässt sich eine stabile und sichere Verbindung erreichen. Das mindestens eine Fügeelement lässt sich insbesondere an "kritischen" Stellen anordnen, um eine stabile Verbindung zu erreichen. Über das mindestens eine Fügeelement ist es auch möglich, besonders belastete Bereiche (beispielsweise besonders thermisch oder abrasiv belastete Bereiche) entsprechend auszugestalten. Beispielsweise wird ein entsprechendes Fügeelement an einem Übergang zwischen einem konvergenten Düsenbereich und einem divergenten Düsenbereich angeordnet. Dieses weist entsprechend angepasste Werkstoffeigenschaften auf, um beispielsweise eine hohe abrasive Belastung zu ermöglichen. Gleichzeitig sorgt es für eine stabile Verbindung (stoffschlüssige Verbindung) zwischen dem ersten Segment und dem zweiten Segment. Ferner kann über mindestens ein Fügeelement eine zusätzliche formschlüssige Verbindung zwischen dem ersten Segment und dem zweiten Segment erreicht werden. Es ist dabei insbesondere auf einfache Weise möglich, einen Formschluss zu erreichen, welcher in einer Richtung quer zu einer Hauptströmungsrichtung einer Gasströmung im Betrieb der Düse wirkt. Dadurch wird die Verbindungsstabilität weiter verbessert.

Insbesondere ist es vorgesehen, dass das mindestens eine Fügeelement zur Kooperation mit entsprechenden Fügeflächen des ersten Segments und des zweiten Segments jeweils mindestens eine Fügeelement-Fügefläche aufweist. Es lässt sich dadurch eine keramisierte in-situ-Fügeverbindung zwischen dem jeweiligen Segment und dem entsprechenden Fügeelement erreichen. Eine Fügeelement-Fügefläche ist zunächst eine Fügefläche an einem Vorkörper des Fügeelements; sie lässt sich grundsätzlich auch als innere Grenzfläche an der hergestellten Faserkeramik-Düse identifizieren.

Günstig ist es, wenn mindestens eines der Folgenden vorgesehen ist:
- das mindestens eine Fügeelement ist ein Ringelement;
- das mindestens eine Fügeelement ist formschlüssig mit dem ersten Segment und/oder dem zweiten Segment verbunden, wobei insbesondere ein Formschluss quer zu einer Hauptströmungsrichtung im Betrieb der Faserkeramik-Düse orientiert ist;

- das mindestens eine Fügeelement ist aus einem keramischen Faserverbundwerkstoff hergestellt;
- das mindestens eine Fügeelement weist einen gleichen oder unterschiedlichen Keramikanteil zu dem ersten Segment und/oder dem zweiten Segment auf.

Es lässt sich dadurch eine sichere Verbindung erreichen. Durch das entsprechende Fügeelement, welches beispielsweise für einen zusätzlichen Formschluss sorgt bzw. welches materialmäßig angepasst ist, lässt sich eine funktionelle Verbesserung der Faserkeramik-Düse erreichen. Insbesondere ist das Ringelement (Fügeelement) rotationssymmetrisch zu einer Achse ausgebildet. Es ist aber grundsätzlich auch möglich, dass das Ringelement beispielsweise vieleckig ausgebildet ist und entsprechende vieleckige Fügeflächen bereitgestellt sind.

Bei einer Ausführungsform ist das mindestens eine Fügeelement an einer Düseninnenseite angeordnet, insbesondere mit mindestens einem der Folgenden:
- das mindestens eine Fügeelement ist an einem Übergang von einem konvergenten Düsenbereich zu einem divergenten Düsenbereich angeordnet;
- das mindestens eine Fügeelement bildet einen Übergang von einem konvergenten Düsenbereich zu einem divergenten Düsenbereich an der Düseninnenseite;
- das mindestens eine Fügeelement ist an der Düseninnenseite gekrümmt ausgebildet und ein Übergang zu dem ersten Segment ist glatt und ein Übergang zu dem zweiten Segment ist glatt;
- eine erste Fügefläche des ersten Segments und eine erste Fügefläche des zweiten Segments sind fluchtend ausgerichtet und das mindestens eine Fügeelement ist mittels einer durchgehenden Fügeelement-Fügefläche stoffschlüssig mit dem ersten Segment an der ersten Fügefläche des ersten Segments und mit dem zweiten Segment an der ersten Fügefläche des zweiten Segments verbunden;
- das mindestens eine Fügeelement ist aus einem Keramikmaterial hergestellt, welches einen höheren Keramikgehalt aufweist als das Material des ersten Segments und/oder das Material des zweiten Segments.

Durch die Anordnung des mindestens einen Fügeelements an dem Übergang von einem konvergenten Düsenbereich zu einem divergenten Düsenbereich lässt sich dieser Übergang entsprechend ausgestalten. Beispielsweise wird das Fügeelement aus einem Material, welches an die Anforderungen an dem Übergang (beispielsweise erhöhte abrasive Belastung) angepasst ist, hergestellt.

Das mindestens eine Fügeelement lässt sich dann beispielsweise auch geometrisch insbesondere an einer Düseninnenseite so ausgestalten, dass ein optimierter geometrischer und funktioneller Übergang erreicht ist. Gleichzeitig sorgt das mindestens eine Fügeelement für die stoffschlüssige Fügeverbindung zwischen dem ersten Segment und dem zweiten Segment.

Günstig ist es, wenn das mindestens eine Fügeelement eine erste Fügeelement-Fügefläche aufweist, eine zweite Fügeelement-Fügefläche aufweist, und eine dritte Fügeelement-Fügefläche aufweist, wobei die erste Fügeelement-Fügefläche zwischen der zweiten Fügeelement-Fügefläche und der dritten Fügeelement-Fügefläche liegt, die zweite Fügeelement-Fügefläche quer zu der ersten Fügeelement-Fügefläche angeordnet ist, und die dritte Fügeelement-Fügefläche quer zu der ersten Fügeelement-Fügefläche orientiert ist, insbesondere mit mindestens einem der Folgenden:
- das mindestens eine Fügeelement ist über die erste Fügeelement-Fügefläche mit dem ersten Segment und dem zweiten Segment stoffschlüssig verbunden;
- das mindestens eine Fügeelement ist an der zweiten Fügeelement-Fügefläche mit dem ersten Segment stoffschlüssig verbunden;
- das mindestens eine Fügeelement ist an der dritten Fügeelement-Fügefläche mit dem zweiten Segment stoffschlüssig verbunden;
- die zweite Fügeelement-Fügefläche und die dritte Fügeelement-Fügefläche sind parallel zueinander;
- mittels der zweiten Fügeelement-Fügefläche und der dritten Fügeelement-Fügefläche wird ein Formschluss bereitgestellt.

Es lässt sich dadurch ein hoher Flächenbereich für die stoffschlüssige Verbindung erreichen. Es wird eine stabile Verbindung erzielt. Gleichzeitig lässt sich über die zweite Fügeelement-Fügefläche und die dritte Fügeelement-Fügefläche ein zusätzlicher Formschluss für die Verbindung erreichen. Dabei ist es wiederum auf einfache Weise möglich, diesen Formschluss in einer Richtung (und Gegenrichtung) quer zu einer Hauptströmungsrichtung einer Gasströmung im Betrieb der Faserkeramik-Düse bereitzustellen. Es wird dadurch eine hohe Stabilität erzielt.

Bei einer Ausführungsform ist das mindestens eine Fügeelement an einer Düsenaußenseite angeordnet, insbesondere mit mindestens einem der Folgenden:
- das mindestens eine Fügeelement ist an einer Fügeelement-Fügefläche mit dem ersten Segment und dem zweiten Segment stoffschlüssig verbunden;
- das mindestens eine Fügeelement ist über einen ersten Bereich mit dem ersten Segment verbunden und ist über einen zweiten Bereich mit dem zweiten Segment verbunden, und das mindestens eine Fügeelement ist beabstandet zu einem Übergang zwischen dem ersten Segment und dem zweiten Segment an der Düsenaußenseite.

Es lässt sich dadurch alternativ oder zusätzlich eine zusätzliche Verbindungsstabilisierung an der Düsenaußenseite erreichen. Dadurch ist es beispielsweise möglich, auf zusätzliche Haltestrukturen oder dergleichen zu verzichten.

Ferner günstig ist es, wenn mindestens eines der Folgenden vorgesehen ist:
- das erste Segment und das zweite Segment sind für den Betrieb der Faserkeramik-Düse funktionell unterschiedliche Bereiche;
- das erste Segment ist ein Konussegment oder weist einen Konusbereich auf und weist insbesondere einen einzigen Konus auf;
- das zweite Segment ist ein Konussegment oder weist einen Konusbereich auf und weist insbesondere einen einzigen Konus auf;
- das erste Segment und das zweite Segment weisen unterschiedliche Konuswinkel auf;
- das erste Segment weist einen Zylinderbereich am Übergang zum zweiten Segment auf;
- das zweite Segment weist einen Zylinderbereich am Übergang zu dem ersten Segment auf;
- das erste Segment weist einen konvergenten Düsenbereich auf und das zweite Segment weist einen divergenten Düsenbereich auf, oder das erste Segment weist einen divergenten Düsenbereich auf und das zweite Segment weist einen konvergenten Düsenbereich auf;
- das erste Segment ist einstückig hergestellt;
- das zweite Segment ist einstückig hergestellt;
- das erste Segment ist aus einem faserverstärkten SiC-Material hergestellt, wobei insbesondere die Faserverstärkung Kohlenstofffasern und/oder SiC-Fasern sind, wobei insbesondere das erste Segment aus C/C-SiC oder SiC-SiC hergestellt ist;
- das zweite Segment ist aus einem faserverstärkten SiC-Material hergestellt, wobei insbesondere die Faserverstärkung Kohlenstofffasern und/oder SiC-Fasern sind, wobei insbesondere das zweite Segment aus C/C-SiC oder SiC-SiC hergestellt ist;
- es ist mindestens ein Fügeelement vorgesehen, welches aus einem faserverstärkten SiC-Material hergestellt ist, wobei insbesondere die Faserverstärkung Kohlenstofffasern und/oder SiC-Fasern sind, wobei insbesondere das zweite Segment aus C/C-SiC oder SiC-SiC hergestellt ist;
- es ist mindestens ein Einsatz vorgesehen, welcher aus einem Material hergestellt ist, dessen Schmelztemperatur größer als die Schmelztemperatur von Silicium ist.

Durch die erfindungsgemäße Lösung ist es möglich, funktionell getrennte Segmente über C-Vorkörper herzustellen, wobei dann eine stoffschlüssige Verbindung erreicht ist.

Durch das Vorsehen eines Zylinderbereichs am Übergang jeweils des ersten Segments und des zweiten Segments ergibt sich eine einfache Herstellbarkeit.

Insbesondere sind für das erste Segment und das zweite Segment jeweils einteilige C-Vorkörper vorgesehen. Die Verbindung erfolgt dann durch in-situ-Fügung über Presspassung oder unter Verwendung von Fügepaste als C-Precursor und (nach Aushärtung der Fügepaste) über Keramisierung.

Durch den mindestens einen Einsatz lässt sich eine funktionale Optimierung der Düse erreichen. Dieser mindestens eine Einsatz ist beispielsweise aus monolithischer Keramik (wie SiSiC, SiC, WC [Wolframcarbid], B₄C [Borcarbid] usw.) hergestellt oder aus einem Metall/Refraktärmetall wie Wolfram eben mit einem Schmelzpunkt größer als der Schmelzpunkt von Silicium. Ein solcher Einsatz kann stoffschlüssig gefügt sein oder lose eingebettet sein, wobei dann eine zusätzliche Fügeverbindung über mindestens ein Fügeelement vorgesehen sein kann wie beispielsweise über ein an der Düsenaußenseite liegendes Fügeelement. Der Einsatz selber kann als Fügeelement wirken oder eben, wie erwähnt, lose eingebettet sein.

Es lässt sich eine keramische Faserkeramik-Düse mit vorteilhaften Eigenschaften angepasst an die jeweilige Funktionalität und insbesondere mit stark verringerter Delaminationsgefahr herstellen.

Bei einer Ausführungsform ist es vorgesehen, dass die Faserverstärkung über Kurzfasern hergestellt ist, welche insbesondere eine Länge im Bereich zwischen 2 mm und 40 mm aufweisen, und/oder Gewebeabschnitte umfasst, welche eine Seitenlänge im Bereich zwischen 2 mm und 40 mm und insbesondere im Bereich zwischen 10 mm und 20 mm aufweisen. Es lassen sich dadurch entsprechende C-Vorkörper insbesondere durch Warmpressen herstellen. Dadurch ergeben sich erweiterte Möglichkeiten.

Die entsprechende Wahl der Kurzfasern bezüglich ihrer Länge bzw. der Gewebeabschnitte bezüglich der Seitenlänge ist entsprechend der Wandstärke der Faserkeramik-Düse gewählt.

Vorteilhafterweise wird eine erfindungsgemäße Faserkeramik-Düse für einen Raketenantrieb verwendet.

Bei dem eingangs genannten Verfahren wird eine Faserkeramik-Düse hergestellt, welche ein erstes Segment und ein zweites Segment aufweist, und bei dem für das erste Segment ein erster C-Vorkörper mit einem Fügebereich hergestellt wird, für das zweite Segment ein zweiter C-Vorkörper mit einem Fügebereich hergestellt wird, wobei der zweite C-Vorkörper getrennt von dem ersten C-Vorkörper hergestellt wird, der erste C-Vorkörper und der zweite C-Vorkörper über die Fügebereiche verbunden werden, und eine Keramisierung der Kombination durchgeführt wird.

Die Verbindung des ersten C-Vorkörpers und des zweiten C-Vorkörpers über die Fügebereiche kann eine Presspassung sein oder es wird eine Fügepaste (als C-Precursor) verwendet. Es ist dann vorgesehen, dass einer oder die Fügebereiche mit Fügepaste versehen werden, bevor die entsprechenden C-Vorkörper verbunden werden. Die Keramisierung kann dann nach Aushärtung der Fügepaste erfolgen.

Das erfindungsgemäße Verfahren weist die bereits im Zusammenhang mit der erfindungsgemäßen Faserkeramik-Düse erläuterten Vorteile auf.

Insbesondere wird die erfindungsgemäße Faserkeramik-Düse über das erfindungsgemäße Verfahren hergestellt.

Bei einer Ausführungsform wird mindestens ein Fügeelement als dritter C-Vorkörper mit einem Fügebereich hergestellt, wobei der mindestens eine dritte C-Vorkörper getrennt von dem ersten C-Vorkörper und getrennt von dem zweiten C-Vorkörper ist, der mindestens eine dritte C-Vorkörper wird mit dem ersten C-Vorkörper und dem zweiten C-Vorkörper über Fügepaste verbunden, und es wird eine Keramisierung der Kombination aus erstem C-Vorkörper, zweitem C-Vorkörper und mindestens einem dritten C-Vorkörper durchgeführt. Es wird dann mindestens ein (keramisches) Fügeelement bereitgestellt, welches für eine Verbindung des ersten Segments und des zweiten Segments sorgt.

Insbesondere wird die Faserkeramik-Düse selbsttragend hergestellt und insbesondere ohne äußere Haltestruktur hergestellt. Dadurch ergeben sich beispielsweise Gewichtsvorteile.

Vorteilhafterweise ist es vorgesehen, dass eine erfindungsgemäße Faserkeramik-Düse an einer Schubkammer und insbesondere Faserkeramik-Schubkammer verwendet wird.

Eine Schubkammer umfasst insbesondere eine erfindungsgemäße Faserkeramik-Düse und eine Brennkammer, welche mit der Faserkeramik-Düse verbunden ist. Vorzugsweise ist die Schubkammer eine Faserkeramik-Schubkammer mit der Faserkeramik-Düse und einer Faserkeramik-Brennkammer.

Insbesondere ist die Brennkammer in der Art eines Rohrs ausgebildet, und es ist eine Fügeverbindung und insbesondere in-situ-Fügeverbindung zwischen der Faserkeramik-Düse und der Brennkammer vorgesehen.

Bei einer Ausführungsform ist an der Brennkammer an einer der Faserkeramik-Düse abgewandten Seite ein Flansch angeordnet. Dieser Flansch dient zur Fixierung der Schubkammer bzw. zur Fixierung von mindestens einem weiteren Element an der Schubkammer, wie beispielsweise einem Brennkopf.

Die nachfolgende Beschreibung bevorzugter Ausführungsformen dient im Zusammenhang mit den Zeichnungen der näheren Erläuterung der Erfindung. Es zeigen:
- Figur 1: eine Schnittdarstellung eines Ausführungsbeispiels einer aus dem Stand der Technik bekannten einteiligen Faserkeramik-Düse;
- Figur 2: eine (Teil-)Schnittdarstellung eines ersten Ausführungsbeispiels einer erfindungsgemäßen Faserkeramik-Düse;
- Figur 3: eine (Teil-)Schnittdarstellung eines zweiten Ausführungsbeispiels einer erfindungsgemäßen Faserkeramik-Düse;
- Figur 4: eine (Teil-)Schnittdarstellung eines dritten Ausführungsbeispiels einer erfindungsgemäßen Faserkeramik-Düse;
- Figur 5: eine (Teil-)Schnittdarstellung eines vierten Ausführungsbeispiels einer erfindungsgemäßen Faserkeramik-Düse;
- Figur 6: eine (Teil-)Schnittdarstellung eines fünften Ausführungsbeispiels einer erfindungsgemäßen Faserkeramik-Düse;
- Figur 7: eine (Teil-)Schnittdarstellung eines sechsten Ausführungsbeispiels einer erfindungsgemäßen Faserkeramik-Düse;
- Figur 8: eine (Teil-)Schnittdarstellung eines ersten Ausführungsbeispiels einer Schubkammer; und
- Figur 9: eine (Teil-)Schnittansicht eines zweiten Ausführungsbeispiels einer Schubkammer.

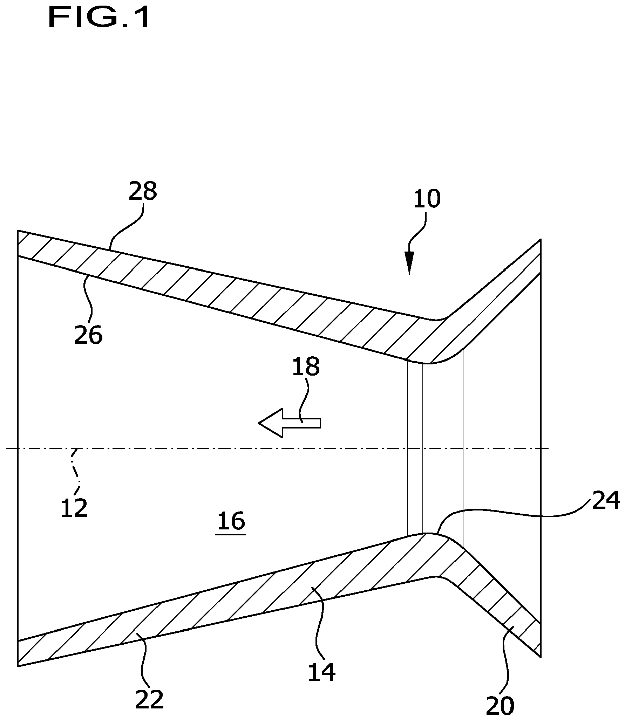

Ein Ausführungsbeispiel einer Faserkeramik-Düse 10, welche aus dem Stand der Technik bekannt ist und in Figur 1 dargestellt ist, ist einstückig ausgebildet und einstückig hergestellt. Die Faserkeramik-Düse 10 hat eine Achse 12, welche eine Symmetrieachse und insbesondere Rotationssymmetrieachse ist. Die Faserkeramik-Düse 10 ist im Wesentlichen rotationssymmetrisch zu der Achse 12.

Die Faserkeramik-Düse 10 weist eine Wandung 14 auf, welche einen Innenraum 16 umgibt. Die Wandung 14 ist aus einem keramischen Faserverbundwerkstoff wie beispielsweise C/C-SiC oder SiC-SiC hergestellt. Bei einem C/C-SiC-Werkstoff liegt eine Faserverstärkung mit C-Fasern und eine freie Kohlenstoffphase vor. Bei einem SiC-SiC-Werkstoff liegt eine Faserverstärkung mit SiC-Fasern vor.

Die Wandung 14 ist einstückig hergestellt.

Bei dem gezeigten Ausführungsbeispiel umfasst die Faserkeramik-Düse 10 (bezogen auf eine Hauptströmungsrichtung 18 im Betrieb der Faserkeramik-Düse 10) einen konvergenten Düsenbereich 20 und einen divergenten Düsenbereich 22. Es liegt ein Übergang 24 von dem konvergenten Düsenbereich 20 zu dem divergenten Düsenbereich 22 vor. Im Bereich des Übergangs 24 ist üblicherweise die Wandung 14 dicker als außerhalb dieses Übergangs 24.

Der konvergente Düsenbereich 20 und der divergente Düsenbereich 22 weisen eine Konusform auf. Es ist dabei grundsätzlich möglich, dass eine Innenseite 26 beispielsweise des divergenten Düsenbereichs 22 und eine Außenseite 28 des divergenten Düsenbereichs 22 unterschiedliche Konuswinkel aufweisen, so dass die Wandung 14 in dem divergenten Düsenbereich 22 eine variierende Dicke in einer Richtung senkrecht zu der Achse 12 aufweist.

Gleiches kann grundsätzlich auch für den konvergenten Düsenbereich 20 gelten.

Ein Konuswinkel für den konvergenten Düsenbereich 20 kann unterschiedlich zu einem Konuswinkel des divergenten Düsenbereichs 22 sein.

Eine variierende Wanddicke 14 innerhalb des konvergenten Düsenbereichs 20 und/oder des divergenten Düsenbereichs 22 und auch an dem Übergang 24 ist insbesondere herstellungsbedingt durch die einstückige Herstellung der Wandung 14.

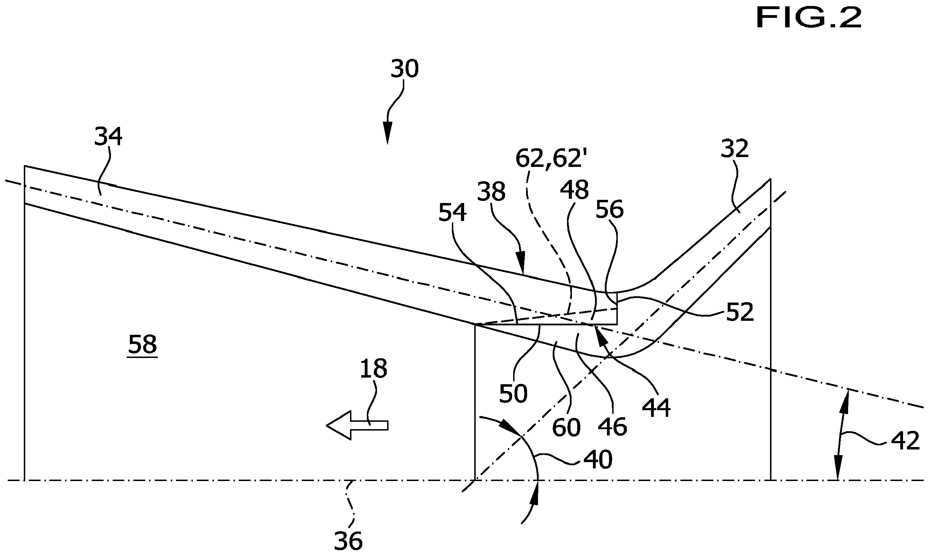

Erfindungsgemäß wird eine Faserkeramik-Düse (Figuren 2 bis 7) bereitgestellt, welche mehrsegmentig ausgebildet ist. Die erfindungsgemäße Faserkeramik-Düse umfasst (mindestens) ein erstes Segment und ein zweites Segment, welche jeweils aus einem Faserverbundwerkstoff hergestellt sind, wobei das erste Segment und das zweite Segment stoffschlüssig miteinander verbunden sind. Insbesondere sind dabei das erste Segment und das zweite Segment funktionell unterschiedliche Bereiche, wobei diese funktionell unterschiedlichen Bereiche gewissermaßen vollständig hergestellt werden. Dadurch ist eine getrennte Optimierung an die jeweilige Funktion möglich und es ergibt sich eine optimierte Funktionsweise für die mehrsegmentige Faserkeramik-Düse.

Bei einem Ausführungsbeispiel ist es vorgesehen, dass für das erste Segment zunächst ein offenporöser pyrolysierter C-Vorkörper (Kohlenstoff-Vorkörper) hergestellt wird. Dieser C-Vorkörper ist faserverstärkt und enthält insbesondere Kohlenstofffasern und/oder SiC-Fasern. Die Fasern liegen in einer C-Matrix. Die durch Pyrolyse erhaltene Offenporosität erlaubt eine Silicium-Infiltration zur Carbidbildung (Reaktion des Siliciums mit Kohlenstoff).

Dieser C-Vorkörper wird insbesondere endkonturnah hergestellt.

Der C-Vorkörper für das erste Segment wird mittels eines Kohlenstoff-Precursors hergestellt, mit entsprechender Fasereinbindung. Es erfolgt eine Aushärtung und Pyrolyse, um den offenporösen C-Vorkörper zu erhalten.

Es wird ein zweiter C-Vorkörper für das zweite Segment insbesondere endkonturnah auf die gleiche Weise hergestellt.

An dem ersten C-Vorkörper und dem zweiten C-Vorkörper werden Fügebereiche hergestellt. Diese werden bereits bei der Herstellung des C-Vorkörpers mithergestellt und/oder es folgt eine nachträgliche Bearbeitung des herstellten C-Vorkörpers zur Bereitstellung der Fügebereiche. Die Fügebereiche umfassen insbesondere Fügeflächen an dem ersten C-Vorkörper und dem zweiten C-Vorkörper, welche aneinander angepasst sind. Es können noch ein oder mehrere zusätzliche Fügeelemente (Fügekörper) an einem dritten C-Vorkörper (und gegebenenfalls weiteren C-Vorkörpern) hergestellt werden, welche zur Fügeverbindung dienen. Dies wird untenstehend noch näher erläutert. Solche dritte C-Vorkörper sind ebenfalls insbesondere faserverstärkt mit C-Fasern und/oder SiC-Fasern.

Der erste C-Vorkörper und der zweite C-Vorkörper und gegebenenfalls das oder die Fügeelemente (dritter C-Vorkörper) werden miteinander zu einer Einheit kombiniert. Dazu werden entsprechende Fügeflächen mit Fügepaste versehen. Die Fügepaste umfasst beispielsweise ein Phenolharz und gegebenenfalls zusätzlich Kohlenstoff. Nach Aushärtung der Fügepaste wird die Kombination aus erstem C-Vorkörper für das erste Segment, dem zweiten C-Vorkörper für das zweite Segment und gegebenenfalls der oder die dritte(n) Vorkörper für (ein) Fügeelement(e) zusammen keramisiert. Insbesondere erfolgt eine Silicierung. Dazu wird beispielsweise das LSI-Verfahren (Liquid Silicium Infiltration) verwendet, bei dem die offenporöse Vorkörperstruktur mit flüssigem Silicium infiltriert wird. Das Silicium reagiert mit Kohlenstoff zu Siliciumcarbid.

Bei der Fügepaste erfolgt während des Aufheizens für die Silicierung eine Kohlenstoffwandlung, und es wird entsprechend Kohlenstoff für die Carbidbildung bereitgestellt.

Bei diesem Keramisierungsvorgang wird auch die Fügeverbindungseinrichtung zwischen dem ersten C-Vorkörper und dem zweiten C-Vorkörper (und gegebenenfalls zwischen einem oder mehreren dritten Vorkörpern und dem ersten und zweiten C-Vorkörper) mitkeramisiert, und es wird eine stoffschlüssige Verbindung hergestellt. Es entsteht dann eine einteilige aber mehrsegmentige Struktur für die Faserkeramik-Düse mit dem ersten Segment und dem zweiten Segment.

Bei diesem Herstellungsverfahren weisen zunächst die C-Vorkörper (erster C-Vorkörper, zweiter C-Vorkörper, weitere C-Vorkörper für Fügeelemente) Fügeflächen auf. Bei der hergestellten Faserkeramik-Düse liegt mittels dieser Fügeflächen eine stoffschlüssige Verbindung vor. In der Regel sind in der hergestellten Faserkeramik-Düse diese Fügeflächen als innere Grenzfläche makroskopisch nicht mehr erkennbar. Bei einer mikroskopischen Analyse insbesondere über eine REM-Untersuchung können jedoch grundsätzlich zumindest näherungsweise die ursprünglichen Fügeflächen als innere Grenzfläche identifiziert werden. Im Folgenden wird deshalb auch für die hergestellte Faserkeramik-Düse der Begriff Fügefläche verwendet.

Es kann auch vorgesehen sein, dass die Fügung des ersten C-Vorkörpers und des zweiten C-Vorkörpers ohne Fügepaste erfolgt. Es erfolgt eine Presspassung der C-Vorkörper an entsprechenden Fügebereichen und anschließend eine Keramisierung. Die stoffschlüssige Verbindung entsteht dann über die Carbidbildung (insbesondere SiC-Bildung) an den Fügebereichen.

Das erste Segment ist dann aus einem ersten keramischen Faserverbundmaterial hergestellt und das zweite Segment ist aus einem zweiten keramischen Faserverbundmaterial hergestellt. Ein entsprechendes Fügeelement an der hergestellten Faserkeramik-Düse ist aus einem dritten keramischen Faserverbundmaterial hergestellt. Grundsätzlich können diese keramischen Faserverbundmaterialien gleich sein. Sie können sich aber auch unterscheiden, um eine entsprechende Funktionsoptimierung der jeweiligen Segmente der Faserkeramik-Düse zu erhalten. Sie können insbesondere bezüglich Fasergehalt, Faserstruktur und Keramikgehalt variieren. Beispielsweise kann es vorgesehen sein, dass an abrasiv höher belasteten Stellen der Faserkeramik-Düse ein Material mit höherem Keramikgehalt verwendet wird.

Grundsätzlich ist der keramische Faserverbundwerkstoff der Segmente ein C/C-SiC-Material, oder ein SiC-SiC-Material. Das Material umfasst eine Fasermatrix aus C-Fasern und/oder SiC-Fasern mit einem keramischen SiC-Gehalt. Bei einem C/C-SiC-Material kann auch noch eine freie Kohlenstoff-Phase vorhanden sein.

Die erfindungsgemäße Faserkeramik-Düse ist eine gefügte Düse mit mehreren Segmenten (mit mindestens dem ersten Segment und dem zweiten Segment). Die Segmente lassen sich dann getrennt optimieren, und es ergibt sich eine einfache Herstellbarkeit. Die Fügung der Segmente über eine Fügeverbindungseinrichtung ist über die Keramisierung der Fügepasteverbindung eine in-situ-Fügung. Durch diese entsprechende in-situ-Fügeverbindungseinrichtungen werden die entsprechenden Segmente durch atomare bzw. molekulare Kräfte zusammengehalten. Diese Fügeverbindung ist nicht zerstörungsfrei lösbar (wobei sie aber grundsätzlich durch mikroskopische Untersuchungsmethoden erkennbar ist).

Ein erstes Ausführungsbeispiel einer erfindungsgemäßen Faserkeramik-Düse, welches in Figur 2 in einer Teildarstellung schematisch gezeigt ist und mit 30 bezeichnet ist, umfasst ein erstes Segment 32 und ein zweites Segment 34. Die Faserkeramik-Düse 30 weist eine Achse 36 auf, welche eine Rotationssymmetrieachse für das erste Segment 32 und das zweite Segment 34 ist. Bei der Schnittdarstellung gemäß Figur 2 ist nur ein (Halb-)Teil gezeigt, wobei der andere Teil bezüglich der Achse 36 spiegelsymmetrisch in der Schnittdarstellung ist.

Das erste Segment 32 bildet für die Hauptströmungsrichtung 18 einen konvergenten Düsenbereich. Das zweite Segment 34 bildet für die Hauptströmungsrichtung 18 einen divergenten Düsenbereich. Ein Düsenhals 38 mit einem Übergang von dem konvergenten Düsenbereich zu dem divergenten Düsenbereich ist bei dem gezeigten Ausführungsbeispiel durch das erste Segment 32 gebildet. Grundsätzlich kann dieser Übergang auch durch das zweite Segment 34 gebildet sein.

Bezogen auf die Achse 36 hat das erste Segment 32 einen ersten Konuswinkel 40. Das zweite Segment 34 hat bezogen auf die Achse 36 einen zweiten Konuswinkel 42.

Grundsätzlich sind, um entsprechend einen konvergenten Bereich und einen divergenten Bereich ausbilden zu können, der erste Konuswinkel 40 und der zweite Konuswinkel 42 mit entgegengesetzter Orientierung versehen. Der erste Konuswinkel 40 und der zweite Konuswinkel 42 sind bei dem gezeigten Ausführungsbeispiel auch betragsmäßig unterschiedlich, und insbesondere ist der erste Konuswinkel 40 betragsmäßig größer als der zweite Konuswinkel 42.

Das erste Segment 32 und das zweite Segment 34 sind über eine Fügeverbindungseinrichtung 44 stoffschlüssig miteinander verbunden.

Das erste Segment 32 ist aus einem ersten keramischen Faserverbundwerkstoff hergestellt, und das zweite Segment 34 ist aus einem zweiten keramischen Faserverbundwerkstoff hergestellt, wobei diese Werkstoffe grundsätzlich gleich oder unterschiedlich sein können. Die Fügeverbindungseinrichtung 44 ist bezüglich des Materials ebenfalls keramisiert.

Die Fügeverbindungseinrichtung 44 umfasst eine erste Stufe 46 an dem ersten Segment 32 und eine daran angepasste zweite Stufe 48 an dem zweiten Segment 34.

Die erste Stufe 46 ist durch eine erste Fügefläche 50 und eine zweite Fügefläche 52 an dem ersten Segment 32 gebildet. Bei einem Ausführungsbeispiel ist die erste Fügefläche 50 parallel zu der Achse 36. Die zweite Fügefläche 52 liegt quer und insbesondere senkrecht zu der Achse 36 und damit auch quer und insbesondere senkrecht zu der ersten Fügefläche 50.

Das zweite Segment 34 weist dazu angepasst eine erste Fügefläche 54 und eine zweite Fügefläche 56 auf. Die erste Fügefläche 54 ist bei dem gezeigten Ausführungsbeispiel parallel zu der Achse 36 und dabei parallel zu der ersten Fügefläche 50 orientiert. Die zweite Fügefläche 56 des zweiten Segments 34 liegt quer und insbesondere senkrecht zu der ersten Fügefläche 54. Sie liegt parallel zu der zweiten Fügefläche 52 des ersten Segments 32.

Wie oben erwähnt sind diese Fügeflächen zunächst Fügeflächen eines C-Vorkörpers bei der Herstellung der Segmente. Sie sind grundsätzlich aber als innere Grenzfläche auch noch identifizierbar in der hergestellten Faserkeramik-Düse 30.

Die Fügeverbindung zwischen dem ersten Segment 32 und dem zweiten Segment 34 wird über die Fügeverbindungseinrichtung 44 hergestellt, wobei die erste Fügefläche 50 des ersten Segments 32 mit der ersten Fügefläche 54 des zweiten Segments 34 korrespondiert, und die zweite Fügefläche 52 des ersten Segments 32 mit der zweiten Fügefläche 56 des zweiten Segments 34 korrespondiert. Die entsprechende keramisierte in-situ-Fügeverbindung wird über die ersten Fügeflächen 50, 54 und die zweiten Fügeflächen 52, 56 hergestellt.

Bei der Herstellung wird entsprechende Fügepaste als C-Precursor so aufgetragen, dass diese zwischen der entsprechenden ersten Fügefläche für den C-Vorkörper des ersten Segments 32 und der entsprechenden ersten Fügefläche für den C-Vorkörper des zweiten Segments 34 liegt und dann entsprechend auch für die Fügeflächen 52, 56. Alternativ kann eine fügepastefreie Presspassung erfolgen.

Bei dem gezeigten Ausführungsbeispiel haben die ersten Fügeflächen 50 und 54 die Form eines Zylindermantels (insbesondere in Bezug auf die entsprechenden Fügeflächen an den jeweiligen C-Vorkörpern für die Segmente 32, 34 und dann mindestens näherungsweise in der hergestellten Faserkeramik-Düse). Die Achse für den Zylindermantel ist die Achse 36.

Die zweiten Fügeflächen 52, 56 haben eine Kreisringform mit einem Mittelpunkt auf der Achse 36.

Die erste Fügefläche 50 und die erste Fügefläche 54 sind parallel zueinander. Die zweite Fügefläche 52 und die erste Fügefläche 56 sind parallel zueinander.

Bei der Faserkeramik-Düse 30 sind das erste Segment 32 und das zweite Segment 34 über die Fügeverbindungseinrichtung 44 an den Fügeflächen 50, 54 und 52, 56 direkt miteinander verbunden (über eine keramische in-situ-Fügung unter der Verwendung von Fügepaste).

Das zweite Segment 34 hat einen Innenraum 58. Das erste Segment 32 ist bei der Faserkeramik-Düse 30 über einen Teilbereich 60, welcher durch die erste Stufe 46 begrenzt ist, in das zweite Segment 34 und dabei in den Innenraum 58 des zweiten Segments 34 eingetaucht. Bei der Herstellung der Faserkeramik-Düse 30 wird entsprechend (nach Versehen der entsprechenden Fügeflächen mit Fügepaste) der Vorkörper für das erste Segment 32 in den Vorkörper für das zweite Segment 34 eingetaucht.

Bei einer Variante eines Ausführungsbeispiels (Figur 2) liegen die ersten Fügeflächen 62, 62' an dem ersten Segment 32 und dem zweiten Segment 34, welche miteinander korrespondieren, in einem Winkel zu der Achse 36. Die entsprechenden Fügeflächen 62, 62' sind dadurch Konusmantelflächen (Konusringe) mit der Achse 36 als Konusachse. Ein Konuswinkel ist dabei so orientiert, dass entsprechend der Vorkörper für das erste Segment 32 in den Vorkörper für das zweite Segment 34 eintauchbar ist.

Eine solche Anordnung kann bei der Herstellung vorteilhaft sein, da sich dadurch ein Herausschieben von Fügepasten beim Eintauchen des Vorkörpers für das erste Segment 32 in den Vorkörper für das zweite Segment 34 verhindern lässt. Es lässt sich dadurch insbesondere sicherstellen, dass ein Fügepastenauftrag auf den entsprechenden Fügeflächen bei der Herstellung verbleibt.

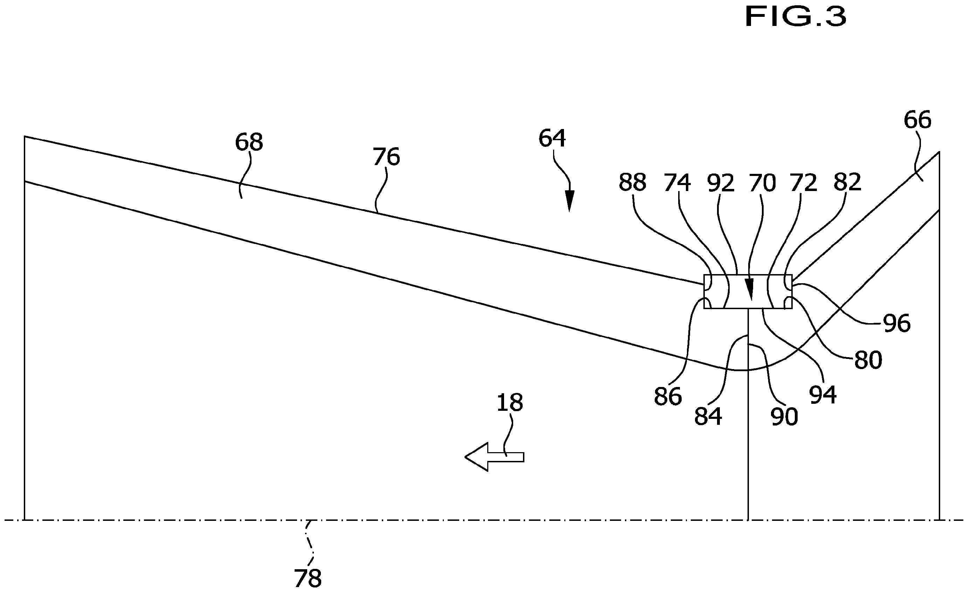

Ein zweites Ausführungsbeispiel einer erfindungsgemäßen Faserkeramik-Düse, welche schematisch in Figur 3 gezeigt und mit 64 bezeichnet ist, umfasst ein erstes Segment 66 und ein zweites Segment 68, welche über eine Fügeverbindungseinrichtung 70 stoffschlüssig miteinander verbunden sind. Das erste Segment 66 bildet einen konvergenten Düsenbereich und das zweite Segment 68 bildet einen divergenten Düsenbereich.

Das erste Segment 66 weist zu dem zweiten Segment 68 hin einen ersten stufenförmigen Ausschnitt 72 auf. Das zweite Segment 68 weist zu dem ersten Segment 66 hin einen zweiten stufenförmigen Ausschnitt 74 auf.

Der erste Ausschnitt 72 und der zweite Ausschnitt 74 sind an einer Düsenaußenseite 76 angeordnet.

Der erste Ausschnitt 72 an dem ersten Segment 66 ist zu einer Achse 78 hin durch eine erste Fügefläche 80 begrenzt. Die erste Fügefläche 80 ist bei dem gezeigten Ausführungsbeispiel parallel zu der Achse 78. Die erste Fügefläche 80 hat die Form eines Zylindermantels mit der Achse 78.

Grundsätzlich kann die erste Fügefläche 80 auch beispielsweise eine Konusmantelform haben.

An dem ersten Segment 66 liegt ferner eine zweite Fügefläche 82, welche quer und insbesondere senkrecht zu der ersten Fügefläche 80 orientiert ist. Die zweite Fügefläche 82 ist quer und insbesondere senkrecht zu der Achse 78 orientiert.

Der erste Ausschnitt 72 ist mittels der ersten Fügefläche 80 und der zweiten Fügefläche 82 gebildet.

Das erste Segment 66 weist ferner eine dritte Fügefläche 84 auf, welche quer und insbesondere senkrecht zu der Achse 78 orientiert ist. Die dritte Fügefläche 84 ist quer und insbesondere senkrecht zu der ersten Fügefläche 80 orientiert. Die dritte Fügefläche 84 ist mindestens näherungsweise parallel zu der zweiten Fügefläche 82 orientiert.

Das zweite Segment 68 weist an dem zweiten Ausschnitt 74 eine erste Fügefläche 86 auf, welche mit der ersten Fügefläche 80 des ersten Segments 66 korrespondiert. An dem zweiten Ausschnitt 74 ist ferner eine zweite Fügefläche 88 des zweiten Segments 68 gebildet, welche quer und insbesondere senkrecht zu der Achse 78 ist und quer und insbesondere senkrecht zu der ersten Fügefläche 86 ist. Die zweite Fügefläche 88 ist insbesondere parallel zu der zweiten Fügefläche 82 des ersten Segments 66.

Ferner weist das zweite Segment 68 eine dritte Fügefläche 90 auf, welche mit der dritten Fügefläche 84 des ersten Segments 66 korrespondiert.

Über die Fügeverbindungseinrichtung 70 ist das erste Segment 66 mit dem zweiten Segment 68 stoffschlüssig direkt über die dritten Fügeflächen 84 und 90 verbunden. (Die Verbindung wird entsprechend mittels Vorkörper durch Fügepastenauftrag und anschließende Keramisierung erreicht.)

An dem ersten Ausschnitt und dem zweiten Ausschnitt 74 ist ein Fügeelement 92 der Fügeverbindungseinrichtung 70 an der Düsenaußenseite 76 angeordnet. Das Fügeelement 92 ist gewissermaßen ein Brückenelement, welches über entsprechende Fügeelement-Fügeflächen 94 und 96 mit den Fügeflächen 80, 82 und 86, 88 der Segmente 66, 68 verbunden ist.

Insbesondere sind die erste Fügefläche 80 des ersten Segments 66 und die erste Fügefläche 86 des zweiten Segments 68 fluchtend ausgerichtet, und eine durchgehende Fügeelement-Fügefläche 94 des Fügeelements 92 ist mit diesen stoffschlüssig verbunden. Eine quer und insbesondere senkrecht dazu ausgerichtete Fügeelement-Fügefläche 96 des Fügeelements 92 ist dann mit der zweiten Fügefläche 82 des ersten Segments 66 und der zweiten Fügefläche 88 des zweiten Segments 68 verbunden.

Die Fügeverbindungseinrichtung 70 umfasst dann die direkte Verbindung an den dritten Fügeflächen 84, 90 des ersten Segments 66 und des zweiten Segments 68, und umfasst eine Fügeverbindung über das Fügeelement 92 an den Ausschnitten 72, 74.

Das Fügeelement 92 ist insbesondere ein Element, welches zunächst als dritter C-Vorkörper (wie oben beschrieben) getrennt von den C-Vorkörpern für das erste Segment 66 und das zweite Segment 68 hergestellt wird. Bei der Kombinierung dieser C-Vorkörper wird dann an den entsprechenden Vorkörper-Ausschnitten (welche die ersten Ausschnitte 72, 74 bilden) Fügepaste aufgetragen, oder an dem C-Vorkörper für das Fügeelement 92 wird Fügepaste aufgetragen, und an dieser Gesamtkombination wird die Keramisierung beispielsweise durch die Infiltrierung mit Flüssigsilicium durchgeführt.

Bei dem in Figur 3 gezeigten Ausführungsbeispiel ist der Übergang von dem konvergenten Düsenbereich in den divergenten Düsenbereich sowohl an dem ersten Segment 66 als auch and dem zweiten Segment 68 ausgebildet.

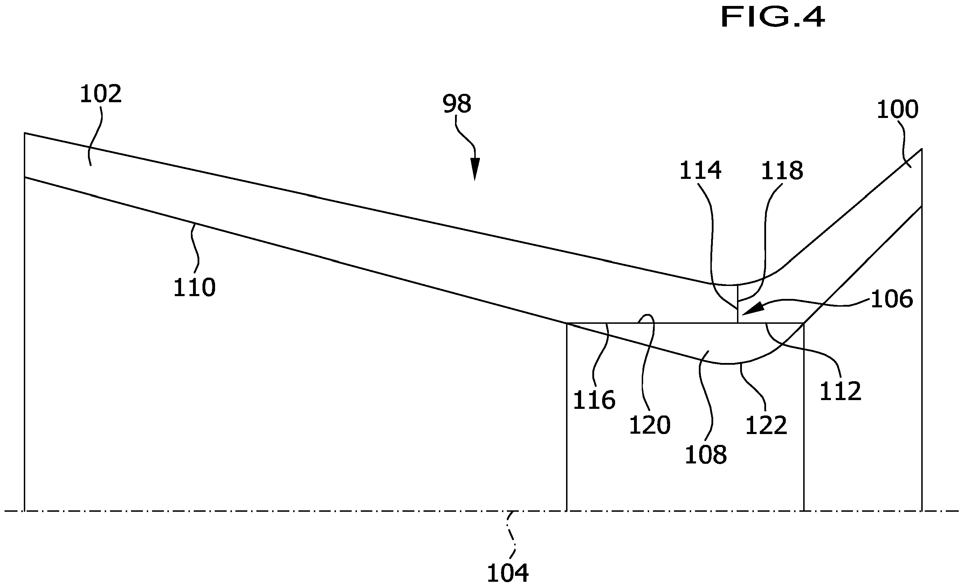

Ein drittes Ausführungsbeispiel einer erfindungsgemäßen Faserkeramik-Düse, welches in Figur 4 in einer Teildarstellung schematisch gezeigt ist und mit 98 bezeichnet ist, umfasst ein erstes Segment 100 und ein zweites Segment 102. Das erste Segment 100 bildet einen konvergenten Düsenbereich und das zweite Segment 102 bildet einen divergenten Düsenbereich.

Das erste Segment 100 und das zweite Segment 102 sind rotationssymmetrisch zu einer Achse 104. Eine Fügeverbindungseinrichtung 106, über welche das erste Segment 100 und das zweite Segment 102 stoffschlüssig miteinander verbunden sind, weist ein Fügeelement 108 auf, welches an einer Düseninnenseite 110 angeordnet ist.

Das erste Segment 100 hat eine erste Fügefläche 112, welche bei dem gezeigten Ausführungsbeispiel parallel zu der Achse 104 ist. Es weist ferner eine zweite Fügefläche 114 auf, welche quer und insbesondere senkrecht zu der Achse 104 ist und dabei quer und insbesondere senkrecht zu der ersten Fügefläche 112 ist.

Das zweite Segment 100 hat eine erste Fügefläche 116, welche parallel zu der Achse 104 ist und fluchtend zu der ersten Fügefläche 112 des ersten Segments 100 ausgerichtet ist. Es weist ferner eine zweite Fügefläche 118 auf, welche quer zu der Achse 104 ist und quer und insbesondere senkrecht zu der ersten Fügefläche 116 ist. Die zweite Fügefläche 118 des zweiten Segments 102 korrespondiert mit der ersten Fügefläche 112 des ersten Segments 100. An den Fügeflächen 114 und 118 der Fügeverbindungseinrichtung 106 sind das erste Segment 100 und das zweite Segment 102 direkt stoffschlüssig miteinander verbunden.

Das Fügeelement 108 weist eine einzige durchgehende Fügeelement-Fügefläche 120 auf, über welche das Fügeelement 108 stoffschlüssig mit dem ersten Segment 100 und dem zweiten Segment 102 an den jeweiligen ersten Fügeflächen 112, 116 verbunden ist. Das Fügeelement 108 bildet gewissermaßen eine Brücke zwischen dem ersten Segment 100 und dem zweiten Segment 102.

An dem Fügeelement 108 ist an der Düseninnenseite 110 an dem Übergang von dem ersten Segment 100 zu dem zweiten Segment 102 (an einem Düsenhals) der Konturverlauf der Düse ausgebildet.

Das Fügeelement 108 ist entsprechend an einer Seite 122, welche an der Düseninnenseite 110 ist, gekrümmt ausgebildet. Das Fügeelement 108 geht glatt über in das erste Segment 100 und das zweite Segment 102.

Die Fügeverbindungseinrichtung 106 wird grundsätzlich gleich wie oben über entsprechende C-Vorkörper (Fügepastenauftrag und Keramisierung) hergestellt.

Bei einem Ausführungsbeispiel ist es vorgesehen, dass das Fügeelement 108 einen höheren Keramikgehalt aufweist als beispielsweise das erste Segment 100 und/oder das zweite Segment 102. Grundsätzlich ist der Übergang von dem konvergierenden Düsenbereich in den divergierenden Düsenbereich thermisch und gegebenenfalls auch abrasiv relativ stark belastet, und dies kann durch entsprechende Materialwahl für das Fügeelement 108 berücksichtigt werden. Das Fügeelement 108 ist dabei vorzugsweise aus einem keramischen Faserverbundwerkstoff und insbesondere carbidkeramischen Faserverbundwerkstoff mit entsprechend eingestelltem Keramikgehalt.

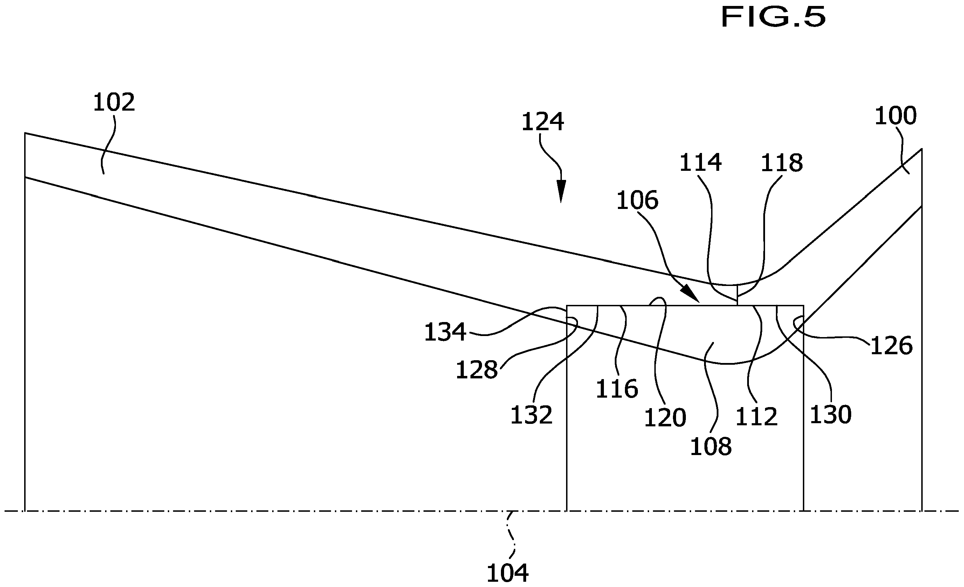

Ein weiteres Ausführungsbeispiel einer erfindungsgemäßen Faserkeramik-Düse, welche schematisch in einer Teildarstellung in Figur 5 gezeigt und mit 124 bezeichnet ist, ist grundsätzlich gleich ausgebildet wie die Faserkeramik-Düse 98. Für gleiche Elemente werden gleiche Bezugszeichen wie bei der Faserkeramik-Düse 98 verwendet.

Bei der Faserkeramik-Düse 124 weist das erste Segment 100 zusätzlich noch eine dritte Fügefläche 126 auf, welche an die erste Fügefläche 112 grenzt und quer und insbesondere senkrecht zu dieser ist. Die dritte Fügefläche 126 ist beabstandet zu der zweiten Fügefläche 114.

Entsprechend weist das zweite Segment 102 eine dritte Fügefläche 128 auf, welche an die erste Fügefläche 116 grenzt und quer und insbesondere senkrecht zu dieser orientiert ist. Diese dritte Fügefläche 128 ist beabstandet zu der zweiten Fügefläche 118.

Die dritten Fügeflächen 126 und 128 sind insbesondere parallel zueinander ausgerichtet.

Durch die dritte Fügefläche 126 ist an dem ersten Segment 100 ein stufenförmiger erster Ausschnitt 130 gebildet, welcher durch die erste Fügefläche 112 und die dritte Fügefläche 126 begrenzt ist.

Entsprechend ist an dem zweiten Segment 102 ein zweiter Ausschnitt 132 gebildet, welcher durch die erste Fügefläche 116 und die dritte Fügefläche 128 gebildet ist.

Das Fügeelement 108 weist zusätzlich zu der Fügeelement-Fügefläche 120 korrespondierende quer dazu orientierte beabstandete Fügeelement-Fügeflächen 134 auf, über welche dann eine stoffschlüssige Fügeverbindung mit dem ersten Segment 100 über die dritte Fügefläche 126 und dem zweiten Segment 102 über die dritte Fügefläche 128 erreicht ist.

Die Faserkeramik-Düse 124 unterscheidet sich folglich von der Faserkeramik-Düse 98 dadurch, dass die entsprechende Fügeverbindungseinrichtung 106 zusätzlich noch eine stoffschlüssige Fügeverbindung quer zu der Fügeelement-Fügefläche 120 aufweist.

Es ist dabei insbesondere wieder vorgesehen, dass das Fügeelement 108 glatt in das erste Segment 100 und glatt in das zweite Segment 102 übergeht. Ansonsten ist die Ausbildung grundsätzlich gleich wie oben anhand der Faserkeramik-Düse 98 beschrieben.

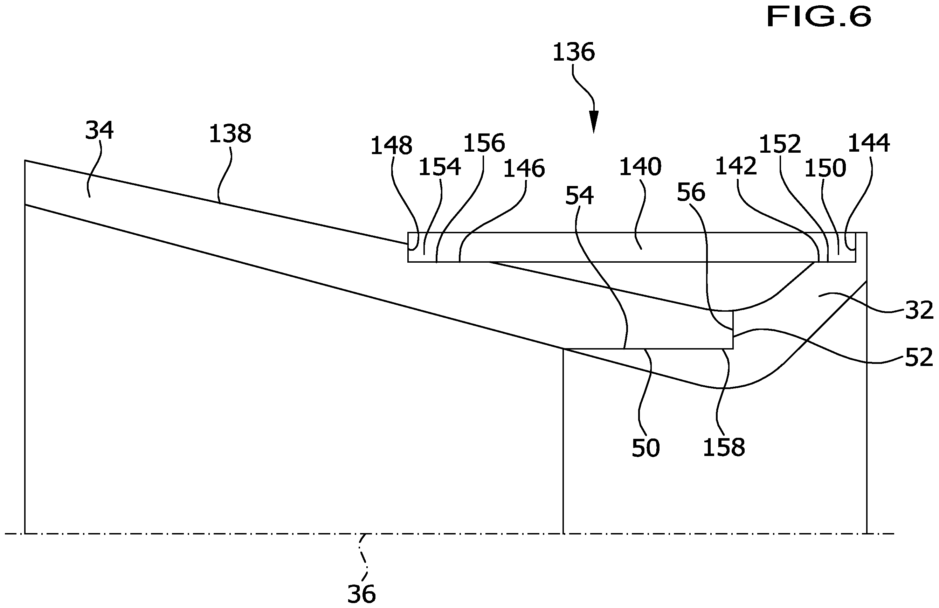

Ein fünftes Ausführungsbeispiel einer erfindungsgemäßen Faserkeramik-Düse, welche in Figur 6 in einer Teildarstellung schematisch gezeigt und mit 136 bezeichnet ist, ist eine Variante der Faserkeramik-Düse 30 gemäß Figur 2. Für gleiche Elemente wie bei der Faserkeramik-Düse 30 werden gleiche Bezugszeichen verwendet.

Die direkte Verbindung zwischen Segmenten 32, 34 der Faserkeramik-Düse 136 ist wie oben anhand der Faserkeramik-Düse 30 beschrieben.

Zusätzlich sind das erste Segment 32 und das zweite Segment 34 an einer Düsenaußenseite 138 über ein Fügeelement 140 verbunden. Das Fügeelement 140 bildet an der Düsenaußenseite 138 eine Brücke zwischen dem ersten Segment 32 und dem zweiten Segment 34.

Das erste Segment 32 hat eine dritte Fügefläche 142 an der Düsenaußenseite 138. Diese dritte Fügefläche 142 ist bei einem Ausführungsbeispiel parallel zu der Achse 36. Ferner hat es eine vierte Fügefläche 144, welche quer und insbesondere senkrecht zu der Achse 36 ist. Die vierte Fügefläche 144 schließt sich an die dritte Fügefläche 142 an und ist quer und insbesondere senkrecht zu dieser.

Das zweite Segment 34 weist entsprechend eine dritte Fügefläche 146 auf, welche fluchtend mit der dritten Fügefläche 142 des ersten Segments 32 ausgerichtet ist. Weiterhin ist eine vierte Fügefläche 148 vorgesehen, welche quer und insbesondere senkrecht zu der Achse 36 und dabei quer und insbesondere senkrecht zu der dritten Fügefläche 146 ist.

Über die Fügeflächen 142, 144 ist ein erster Ausschnitt an der Düsenaußenseite 138 des ersten Segments 32 gebildet. Über die dritte Fügefläche 146 und die vierte Fügefläche 148 ist ein zweiter Ausschnitt an der Düsenaußenseite an dem zweiten Segment 34 gebildet.

Das Fügeelement 140 ist über entsprechende Fügeelement-Fügeflächen mit einem ersten Bereich 150 an diesem ersten Ausschnitt 152 positioniert. Es ist mit einem zweiten Bereich 154 an diesem zweiten Ausschnitt 156 positioniert. Es ist dabei jeweils eine stoffschlüssige Verbindung hergestellt.

Das Fügeelement 140 bildet einen Steg, welcher beabstandet zu einem Düsenhals 158 an der Düsenaußenseite 138 positioniert ist (insbesondere mit einem Zwischenraum), und stoffschlüssig über den jeweiligen ersten Bereich 150 und den zweiten Bereich 154 mit den Segmenten 32, 34 verbunden ist.

Es wird dadurch eine zusätzliche Stabilisierung erreicht.

Grundsätzlich kann diese Verbindung über ein Fügeelement 140 beabstandet zu dem Düsenhals 158 an der Düsenaußenseite 138 auch bei der Faserkeramik-Düse 64 gemäß Figur 3 oder der Faserkeramik-Düse 98 gemäß Figur 4 oder der Faserkeramik-Düse 124 gemäß Figur 5 realisiert werden.

Durch den ersten Ausschnitt 130 und den zweiten Ausschnitt 132 ist für das Fügeelement 108 an dem ersten Segment 100 und dem zweiten Segment 102 zusätzlich ein Formschluss an den dritten Fügeflächen 126 bzw. 128 erreicht. Die Fügeflächen 126, 128 welche den Formschluss bereitstellen, liegen dabei quer und insbesondere senkrecht zu der Hauptströmungsrichtung 18 einer Gasströmung in der Faserkeramik-Düse in deren Betrieb.

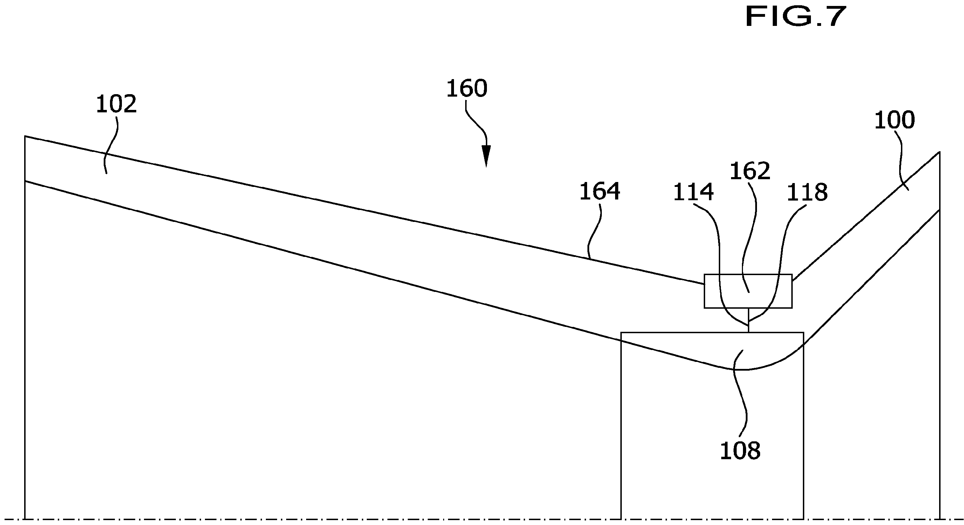

Ein weiteres Ausführungsbeispiel einer erfindungsgemäßen Faserkeramik-Düse 160, welches in Figur 7 gezeigt ist, ist grundsätzlich ausgebildet wie die Faserkeramik-Düse 124 gemäß Figur 5. Für gleiche Elemente werden gleiche Bezugszeichen verwendet.

Bei der Faserkeramik-Düse 160 ist ein weiteres Fügeelement 162 an einer Düsenaußenseite 164 vorgesehen. Die entsprechende Ausbildung entspricht derjenigen, wie sie oben anhand von Figur 3 bei der Faserkeramik-Düse 64 beschrieben wurde.

Das Fügeelement 162 entspricht dem Fügeelement 92.

Bei der Faserkeramik-Düse 160, welche im Wesentlichen bezüglich der Fügeverbindungseinrichtung eine Kombination der Ausführungsformen der Düse 64 und der Düse 124 ist, ist ein Fügeelement 108 an einer Düseninnenseite und das Fügeelement 162 an der Düsenaußenseite 164 vorgesehen.

Zwischen dem Fügeelement 162 und dem Fügeelement 108 sind das erste Segment 100 und das zweite Segment 102 direkt über Fügeflächen 114, 118 (zweite Fügeflächen) miteinander verbunden.

Die entsprechende Anordnung eines zusätzlichen Fügeelements 162 kann auch bei der Faserkeramik-Düse 98 gemäß Figur 4 vorgesehen sein.

Grundsätzlich kann auch die Faserkeramik-Düse 160 mit einem überbrückenden Fügeelement 140 gemäß Figur 6 verwendet werden.

Die Faserkeramik-Düse 160 wurde im Zusammenhang mit einem Fügeelement 108 beschrieben. Es ist aber beispielsweise auch möglich, dass das Element 108 kein Fügeelement ist, sondern ein Einsatz, welcher keine Fügefunktion hat. Dieser Einsatz 108 ist dann insbesondere formschlüssig angeordnet und gewissermaßen lose (ohne Stoffschlussverbindung) eingebettet. Es kann aber auch ein Stoffschluss vorliegen.

Der Einsatz ist insbesondere aus einem Material hergestellt, dessen Schmelzpunkt höher ist als der Schmelzpunkt von Silicium. Er ist beispielsweise aus einer monolithischen Keramik wie SiSiC, SiC, WC, B₄C oder aus einem entsprechenden Metall wie Wolfram hergestellt. Er dient dazu, an dem Übergang von dem konvergenten Bereich zu dem divergenten Bereich eine hohe Abrasionsbeständigkeit, Temperaturbeständigkeit und so weiter zu erreichen. Die stoffschlüssige Fügeverbindung wird dann bei dieser Variante eines Ausführungsbeispiels durch die direkte Fügeverbindung zwischen erstem Segment 100 und zweitem Segment 102 und durch das Fügeelement 162 erreicht (welches dann bei dieser Ausführungsform das einzige Fügeelement ist).

Grundsätzlich kann ein solcher beschriebener Einsatz, wenn er aus einem entsprechenden Material hergestellt ist, auch stoffschlüssig und insbesondere durch eine keramisierte Verbindung mit den entsprechenden Segmenten verbunden sein.

Erfindungsgemäß wird eine Faserkeramik-Düse mit einer Mehrzahl von Segmenten bereitgestellt, wobei benachbarte Segmente stoffschlüssig (über eine keramisierte Fügepastenverbindung) und gegebenenfalls zusätzlich durch Formschluss verbunden sind. Es lässt sich dadurch eine delaminationsfreie CMC-Düsenstruktur bereitstellen, das heißt es lässt sich eine delaminationsfreie Faserkeramik-Düse mit Faserverstärkung bereitstellen.

Durch die mehrsegmentige Ausbildung lassen sich die Werkstoffeigenschaften an jeweiligen Bereichen der Faserkeramik-Düse an die in Strömungsrichtung unterschiedlichen mechanischen, thermischen und abrasiven Lasten der Faserkeramik-Düse anpassen.

Insbesondere ist es dadurch möglich, die Düsenkontur in mindestens zwei Einzelsegmente mit einfach-konischer Struktur aufzuteilen. Die entsprechenden Vorkörper für die Segmente werden getrennt hergestellt und pyrolysiert. Fügebereiche und insbesondere Fügeflächen werden mit geeigneter Passung hergestellt und gegebenenfalls an dem C-Vorkörper mechanisch bearbeitet wie beispielsweise durch Rundschleifen und Fräsen. Es wird eine Verbindung mittels Fügepaste hergestellt. Nach dem Härten der Fügepaste wird dann die Kombination gegebenenfalls mit einem oder mehreren zusätzlichen Fügeelementen in einem Stück keramisiert und dabei insbesondere siliciert. Es kann dann vorgesehen sein, dass noch die Innenkontur der Düse und die Passfläche insbesondere zur Anbindung an eine Brennkammer mechanisch bearbeitet werden.

Bei der erfindungsgemäßen Lösung ist es möglich, bei der Herstellung einfach-konische Kerne beispielsweise mit zylindrischen Ausläufen zu verwenden. Dadurch kann der Wickelwinkel bzw. der Faserwinkel in einem größeren Bereich variiert werden, als wenn beispielsweise ein doppel-konischer Kern verwendet werden muss. Dies wiederum ermöglicht eine bessere Anpassung an die mechanischen Lasten der Faserkeramik-Düse. Weiterhin kann auch durch Variation eines Wickelwinkels in axialer Richtung (beispielsweise längs der Achse 36) ein Unterschied von Wandstärken zwischen großen und kleinen Durchmesserbereichen verringert werden. Es lässt sich dadurch die Faserkeramik-Düse mit einheitlicher Wandstärke berücksichtigen.

Wenn entsprechende zylindrische Ausläufer (vergleiche die Faserkeramik-Düse 30) verwendet werden, dann muss grundsätzlich auch der Übergang zwischen einem konvergenten Düsenbereich und einem divergenten Düsenbereich bezüglich der Wandstärke nicht berücksichtigt werden.

Grundsätzlich ist der Aufbau eines Laminats aus 2D-Gewebezuschnitten bei einfach-konischen Geometrien einfacher als bei doppelt-konischen Konturen. Bei der erfindungsgemäßen Lösung lassen sich getrennte C-Vorkörper für unterschiedliche Konusbereiche herstellen. Es lassen sich dadurch insbesondere trapezförmige Zuschnitte für einfach-konische Geometrien verwenden, welche einfacher herstellbar sind als doppel-trapezförmige Zuschnitte. Weiterhin kann bei der erfindungsgemäßen Lösung die Anzahl der Zuschnitte reduziert werden. Dadurch wiederum kann die Größe der Zuschnitte erhöht werden. Dies erleichtert die Handhabbarkeit der Zuschnitte und auch den Laminiervorgang. Die Positionstoleranzen bei einfach-trapezförmigen Zuschnitten auf einfach-konischen Kernen sind größer und erleichtern den Laminiervorgang im Vergleich zu dem Falle, dass gewissermaßen zusammen ein Doppelkonus hergestellt werden muss. Bei doppel-trapezförmigen Zuschnitten ist eine hohe Positionsgenauigkeit in axialer Richtung erforderlich. Durch die erfindungsgemäße Lösung erleichtert sich grundsätzlich die Herstellbarkeit.

Weiterhin ist es auch möglich, einfach-konische Kerne mit geflochtenen oder gestrickten Faserpreformen zu belegen. Durch axiale Zugkräfte spannt sich Faserhalbzeug auf den Kern und nimmt dessen Kontur an. Bei doppelkonischen Kernen ist dies in der Regel nicht möglich. Auch dies erleichtert die Herstellung.

Weiterhin kann bei der erfindungsgemäßen Lösung bei der getrennten Herstellung von C-Vorkörpern für entsprechende Segmente ein Kern bzw. eine Außenform einteilig ausgeführt werden. Dadurch ergibt sich eine leichtere Trennung vom Kern und einer eventuell vorhandenen Außenform. Insbesondere müssen keine Hinterschnitte oder dergleichen vorgesehen werden. Weiterhin kann durch die Aufteilung auf getrennte C-Vorkörper und damit auf einfach-konische Bereiche eine Kurzfaserverstärkung durchgeführt werden mit Fasern (C-Fasern und/oder SiC-Fasern), welche insbesondere eine Länge zwischen 2 mm und 40 mm haben. Dadurch wiederum ist eine Herstellung über Warmpressung möglich. Es können dabei dann Wandstärken beliebig definiert werden, und Wandstärken können in axialer Richtung an Betriebslasten besser angepasst werden.

Durch die entsprechende resultierende 3D-Faserarchitektur bei der Verwendung von Kurzfasern können entsprechende kurzfaserverstärkte C-Vorkörper delaminationsfrei pyrolysiert werden. Es können höhere Aufheizraten und kürzere Prozesszeiten realisiert werden, im Vergleich zu gewickelten oder laminierten faserverstärkten Vorkörpern.

Neben Kurzfasern sind auch kleine Gewebezuschnitte oder Prepregzuschnitte bei der erfindungsgemäßen Lösung möglich, welche insbesondere eine Breite kleiner 20 mm² aufweisen. Insbesondere ist eine Verwendung von entsprechenden Zuschnitten im Bereich zwischen 2 mm x 2 mm bis ca. 20 mm x 20 mm und bevorzugt zwischen 5 mm x 5 mm und 10 mm x 10 mm vorgesehen. Es ergibt sich dadurch ein leichteres Einfüllen, eine homogenere Faserverteilung und auch Harzverteilung bei der Herstellung. Dies wiederum ergibt eine homogenere Phasenverteilung in dem hergestellten Segment und insbesondere C/C-SiC-Segment. Weiterhin ergibt sich grundsätzlich eine höhere thermische Beständigkeit und höhere Thermoschockbeständigkeit bei einer 3D-Faserarchitektur mit Kurzfasern bzw. mit relativ kleinen Gewebeabschnitten im Vergleich zu gewickelten oder laminierten Bauteilen.

Wenn bei der Herstellung eines C-Vorkörpers flexible Gegenformen wie zum Beispiel Folien verwendet werden, ist aufgrund der Auftrennung in unterschiedliche C-Vorkörper eine gleichmäßige Druckaufbringung auf der gesamten Bauteiloberfläche möglich. Die Faltenbildung wird beispielsweise gegenüber einer doppelt-konischen Bauweise insbesondere im Bereich des Düsenhalses deutlich reduziert.

Es sind auch nicht mehr speziell hergestellte flexible Gegenformen notwendig.

Durch die erfindungsgemäße Faserkeramik-Düse mit einer Mehrzahl von Segmenten, welche stoffschlüssig miteinander verbunden sind, lässt sich der Wandstärkenunterschied zwischen kleinen und großen Durchmessern bei der Faserkeramik-Düse verringern. Beispielsweise ermöglicht ein zylindrischer Übergang wie bei der Faserkeramik-Düse 30 zwischen dem konvergenten Düsenbereich und dem divergenten Düsenbereich eine zuverlässige Komprimierung von Laminat bei der Herstellung. Dies führt zu einer geringeren Schrumpfbehinderung der Faserarchitektur als bei einer doppeltkonischen Herstellungsweise, bei der der konvergente Düsenbereich und der divergente Düsenbereich bereits in der C-Vorkörperphase zusammen an einem Vorkörper hergestellt werden. Insgesamt ergibt sich eine geringere Schrumpfbehinderung in radialer Richtung, und es können dadurch die Laminationen in radialer Richtung senkrecht zu der Achse 36 minimiert werden.

Durch die in-situ-Fügetechnik über Fügepaste mit anschließender Aushärtung und Keramisierung lassen sich selbsttragende, dünnwandige Düsenstrukturen herstellen, die ohne äußere Haltestrukturen eingesetzt werden können. Durch die mechanische Bearbeitung einer Innenkontur nach dem Fügen der Segmente und der Keramisierung entsteht eine strömungstechnisch ideale Oberfläche ohne Stufen und Absätze.

In einem Düsenhals 38, welcher grundsätzlich abrasiv und thermisch hoch beansprucht ist, lassen sich zusätzliche Elemente wie das Fügeelement 108 einbringen. Dieses Fügeelement 108 wird mit hoher Verschleißbeständigkeit hergestellt wie beispielsweise aus einem C/C-SiC-Werkstoff mit hohem Konvertierungsgrad und mit hohem SiC-Gehalt (das heißt mit hohem keramischen Gehalt). Grundsätzlich lassen sich auch monolithische Keramiken und Metalle einbringen. Die Einbringung kann auch grundsätzlich formschlüssig erfolgen, wie bei der Faserkeramik-Düse 124.

Die Fügung erfolgt dabei vor einer Keramisierung, so dass eine selbsttragende Düsenstruktur entsteht, die nicht in einer Haltestruktur gefasst werden muss.

Wie bereits oben erwähnt können einzelne Düsenabschnitte aus unterschiedlichen Werkstoffvarianten mit unterschiedlicher Faserarchitektur und Werkstoffzusammensetzung (und insbesondere mit unterschiedlichem Keramikgehalt) hergestellt werden. Damit ist eine Lastanpassung in den unterschiedlichen Bereichen möglich.

Eine erfindungsmäße Faserkeramik-Düse wird insbesondere in einem Raketenantrieb oder generell in einem Flugkörperantrieb eingesetzt.

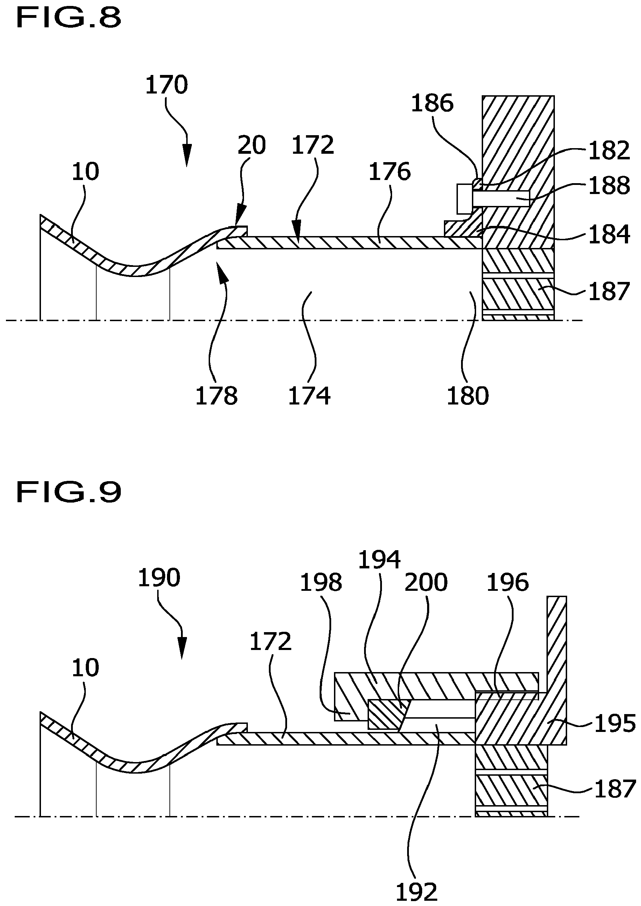

Ein Ausführungsbeispiel einer erfindungsgemäßen Schubkammer, insbesondere eines Flugkörperantriebs wie eines Raketenantriebs, welches in Figur 8 in einer (Teil-)Schnittdarstellung schematisch gezeigt und mit 170 bezeichnet ist, ist eine Faserkeramik-Schubkammer und umfasst eine Brennkammer 172 mit einem Brennraum 174. Die Brennkammer 172 ist eine Faserkeramik-Brennkammer.

Bei einem Ausführungsbeispiel ist eine Wandung 176 der Brennkammer 172 aus einem Faserverbund-Werkstoff hergestellt.

Bei einem Ausführungsbeispiel hat die Brennkammer 172 mit ihrer Wandung 176 eine zylindrische Gestalt und ist insbesondere als Rohr ausgebildet.

In einem ersten Endbereich 178 sitzt an der Brennkammer 172 eine Faserkeramik-Düse 10 wie oben beschrieben.

Beispielsweise ist die Wandung 176 (das Rohr der Brennkammer 172) in den konvergenten Düsenbereich 20 eingetaucht, und entsprechend überlappt die Wandung 14 der Faserkeramik-Düse 10 an dem konvergenten Düsenbereich 20 die Wandung 176.

Die Faserkeramik-Düse 10 ist wie oben beschrieben ausgestaltet.

An einem dem Endbereich 178 gegenüberliegenden zweiten Endbereich 180 der Brennkammer 172 ist an der Brennkammer 172 ein Flansch 182 angeordnet.

Bei einem Ausführungsbeispiel hat der Flansch 182 einen ersten Bereich 184, welcher mit einer Außenseite der Wandung 176 verbunden ist, und einen zweiten Bereich 186. Der zweite Bereich 186 liegt quer und insbesondere senkrecht zu dem ersten Bereich 184. Über den zweiten Bereich 186 lässt sich die Schubkammer 170 als Ganzes an einer Anwendung wie beispielsweise in einem Flugkörperantrieb fixieren. Beispielsweise ist es auch möglich, dass über den zweiten Bereich 186 eine Einspritzvorrichtung 187 mit der Brennkammer 172 verbunden ist. Die Einspritzvorrichtung 187 dient zum Einspritzen von Treibstoff (Brennstoff und Oxidator) in den Brennraum 174.

An dem zweiten Bereich 186 sind Bolzen 188 oder Schrauben oder dergleichen angeordnet, welche zu dieser Fixierung dienen.

Der Flansch 182 ist bei einem Ausführungsbeispiel an dem ersten Bereich 184 stoffschlüssig mit der Brennkammer 172 verbunden.

Die Bolzen 188 oder Schrauben sind umfänglich verteilt.

Die Faserkeramik-Düse ist mit der Brennkammer 172 über eine in-situ-Fügeverbindung beispielsweise stoffschlüssig verbunden.

Ein weiteres Ausführungsbeispiel einer erfindungsgemäßen Schubkammer, welche in Figur 9 gezeigt und mit 190 bezeichnet ist, umfasst eine Brennkammer wie oben beschrieben. Es werden für gleiche Element wie bei der Schubkammer 170 gleiche Bezugszeichen verwendet.

An einem Endbereich der Brennkammer 172 der Schubkammer 190 sitzt eine Faserkeramik-Düse wie anhand der Schubkammer 170 beschrieben.

An einem gegenüberliegenden Endbereich ist an der Brennkammer 172 ein Flansch 192 angeordnet, welcher insbesondere über eine (in-situ-)Fügeverbindung mit der Brennkammer 172 verbunden ist.

Es ist eine Überwurfmutter 194 vorgesehen, welche an einem Gewinde 196 mit einem Teil 195 des Antriebssystems formschlüssig gehalten ist.

Die Überwurfmutter 194 hat einen ringförmigen Absatz 198, welcher auf ein Ringelement 200, welches insbesondere geteilt ist, wirkt und dieses gegen eine Stirnseite des Flansches 192 drückt. Dadurch wird der Flansch 192 (mit der Brennkammer 172 und der Faserkeramik-Düse 10) gegen das Teil 195 gepresst.

Erfindungsgemäß wird eine Schubkammer mit einer Brennkammer und einer erfindungsgemäßen Faserkeramik-Düse 10 bereitgestellt. Über einen Flansch 182 bzw. 192 lässt sich die Schubkammer 170 an einer Anwendung fixieren bzw. es lässt sich beispielsweise eine Einspritzvorrichtung 187 an der Schubkammer fixieren.

### Bezugszeichenliste

- 10: Faserkeramik-Düse
- 12: Achse
- 14: Wandung
- 16: Innenraum
- 18: Hauptströmungsrichtung
- 20: konvergenter Düsenbereich
- 22: divergenter Düsenbereich
- 24: Übergang
- 26: Innenseite
- 28: Außenseite
- 30: Faserkeramik-Düse
- 32: erstes Segment
- 34: zweites Segment
- 36: Achse
- 38: Düsenhals
- 40: erster Konuswinkel
- 42: zweiter Konuswinkel
- 44: Fügeverbindungseinrichtung
- 46: erste Stufe
- 48: zweite Stufe
- 50: erste Fügefläche
- 52: zweite Fügefläche
- 54: erste Fügefläche
- 56: zweite Fügefläche
- 58: Innenraum
- 60: Teilbereich
- 62, 62': Fügefläche
- 64: Faserkeramik-Düse (zweite Ausführungsform)
- 66: erstes Segment
- 68: zweites Segment
- 70: Fügeverbindungseinrichtung
- 72: erster Ausschnitt
- 74: zweiter Ausschnitt
- 76: Düsenaußenseite
- 78: Achse
- 80: erste Fügefläche
- 82: zweite Fügefläche
- 84: dritte Fügefläche
- 86: erste Fügefläche
- 88: zweite Fügefläche
- 90: dritte Fügefläche
- 92: Fügeelement
- 94: Fügeelement-Fügefläche
- 96: Fügeelement-Fügefläche
- 98: Faserkeramik-Düse (dritte Ausführungsform)
- 100: erstes Segment
- 102: zweites Segment
- 104: Achse
- 106: Fügeverbindungseinrichtung
- 108: Fügeelement
- 110: Düseninnenseite
- 112: erste Fügefläche
- 114: zweite Fügefläche
- 116: erste Fügefläche
- 118: zweite Fügefläche
- 120: Fügeelement-Fügefläche
- 122: Seite
- 124: Faserkeramik-Düse (vierte Ausführungsform)
- 126: dritte Fügefläche
- 128: dritte Fügefläche
- 130: erster Ausschnitt
- 132: zweiter Ausschnitt
- 134: Fügeelement-Fügefläche
- 136: Faserkeramik-Düse (fünfte Ausführungsform)
- 138: Düsenaußenseite
- 140: Fügeelement
- 142: dritte Fügefläche
- 144: vierte Fügefläche
- 146: dritte Fügefläche
- 148: vierte Fügefläche
- 150: erster Bereich
- 152: erster Ausschnitt
- 154: zweiter Bereich
- 156: zweiter Ausschnitt
- 158: Düsenhals
- 160: Faserkeramik-Düse (sechste Ausführungsform)
- 162: Fügeelement
- 164: Düsenaußenseite
- 170: Schubkammer
- 172: Brennkammer
- 174: Brennraum
- 176: Wandung
- 178: erster Endbereich
- 180: zweiter Endbereich
- 182: Flansch
- 184: erster Bereich
- 186: zweiter Bereich
- 187: Einspritzvorrichtung
- 188: Bolzen
- 190: Schubkammer
- 192: Flansch
- 194: Überwurfmutter
- 195: Teil des Antriebssystems
- 196: Gewinde
- 198: Absatz
- 200: Ringelement

## Patentansprüche

1. Faserkeramik-Düse, umfassend mindestens ein erstes Segment (32; 66; 100) aus einem ersten keramischen Faserverbundwerkstoff und ein zweites Segment (34; 68; 102) aus einem zweiten keramischen Faserverbundwerkstoff, und eine Fügeverbindungseinrichtung (44; 70; 106), mittels welcher das erste Segment (32; 66; 100) und das zweite Segment (34; 68; 102) stoffschlüssig miteinander verbunden sind.

2. Faserkeramik-Düse nach Anspruch 1, **dadurch gekennzeichnet, dass** das erste Segment (32; 66; 100) und das zweite Segment (34; 68; 102) an Fügebereichen der Fügeverbindungseinrichtung (44; 70; 106) verbunden sind, welche keramisiert sind, insbesondere mit mindestens einem der Folgenden:
- ein Fügebereich ist mittels Fügepaste an korrespondierenden Fügeflächen (50, 54; 52, 56; 94, 80, 86) hergestellt;
- ein Fügebereich ist mittels Presspassung an korrespondierenden Fügeflächen und Keramisierung hergestellt;
- eine Fügefläche (50, 52) des ersten Segments (32; 66; 100) und eine Fügefläche (54, 56) des zweiten Segments (34; 68; 102) ist eben ausgebildet;
- das erste Segment (32; 66; 100) und das zweite Segment (34; 68; 102) weisen jeweils mindestens zwei Fügeflächen (50, 52; 54, 56) auf.

3. Faserkeramik-Düse nach Anspruch 1 oder 2, **dadurch gekennzeichnet, dass** die Fügeverbindungseinrichtung (44; 70; 106) an dem ersten Segment (32; 66; 100) mindestens eine erste Fügefläche (50) und eine zweite Fügefläche (52) umfasst, wobei die erste Fügefläche (50) quer und insbesondere senkrecht zu der zweiten Fügefläche(52) orientiert ist, und dass die Fügeverbindungseinrichtung (44; 70; 106) an dem zweiten Segment (34; 68; 102) mindestens eine erste Fügefläche (54) und eine zweite Fügefläche (56) umfasst, wobei die erste Fügefläche (54) quer und insbesondere senkrecht zu der zweiten Fügefläche (56) orientiert ist, insbesondere **gekennzeichnet durch** mindestens eines der Folgenden:
- die erste Fügefläche (50; 62) an dem ersten Segment (32) ist bezogen auf eine Achse (36) des ersten Segments (32) eine Zylindermantelfläche oder eine Konusmantelfläche;
- die zweite Fügefläche (52) an dem ersten Segment (32) ist quer und insbesondere senkrecht zu einer Achse (36) des ersten Segments (32);
- die erste Fügefläche (54; 62') an dem zweiten Segment (34) ist bezogen auf eine Achse (36) des zweiten Segments (34) eine Zylindermantelfläche oder eine Konusmantelfläche;
- die zweite Fügefläche (56) an dem zweiten Segment (34) ist quer und insbesondere senkrecht zu einer Achse (36) des zweiten Segments (34);
- die erste Fügefläche (50; 62) an dem ersten Segment (32) und die erste Fügefläche an dem zweiten Segment (34) sind parallel und/oder fluchtend zueinander;
- die zweite Fügefläche (52) an dem ersten Segment (32) und die zweite Fügefläche (56) an dem zweiten Segment (34) sind parallel und/oder fluchtend zueinander.

4. Faserkeramik-Düse nach Anspruch 3, **gekennzeichnet durch** mindestens eines der Folgenden:
- das erste Segment (66) weist eine dritte Fügefläche (84) auf, welche parallel zu der ersten Fügefläche (80) oder zweiten Fügefläche (82) des ersten Segments (66) ist;
- das zweite Segment (68) weist eine dritte Fügefläche (90) auf, welche parallel zu der ersten Fügefläche (86) oder zweiten Fügefläche (88) des zweiten Segments (68) ist;
- das erste Segment (32) weist eine vierte Fügefläche (144) auf, welche parallel zu der ersten Fügefläche (50) oder zweiten Fügefläche (52) des ersten Segments (32) ist;
- das zweite Segment (34) weist eine vierte Fügefläche auf, welche parallel zu der ersten Fügefläche (54) oder zweiten Fügefläche (56) des zweiten Segments (34) ist;
- das erste Segment (32) weist eine fünfte Fügefläche auf, welche parallel zu der ersten Fügefläche (50) oder zweiten Fügefläche (22) des ersten Segments (32) ist;
- das zweite Segment (34) weist eine fünfte Fügefläche auf, welche parallel zu der ersten Fügefläche (54) oder zweiten Fügefläche (56) des zweiten Segments (34) ist.

5. Faserkeramik-Düse nach einem der vorangehenden Ansprüche, **dadurch gekennzeichnet, dass** eine Fügefläche (50; 52) an dem ersten Segment (32; 66; 100) eine Ringform hat, und dass eine Fügefläche (54; 56) an dem zweiten Segment (34; 68; 102) eine Ringform hat.

6. Faserkeramik-Düse nach einem der vorangehenden Ansprüche, **gekennzeichnet durch** mindestens eines der Folgenden:
- das erste Segment (32; 66; 100) und das zweite Segment (34; 68; 102) sind an jeweiligen Fügeflächen (50, 54; 52, 56; 84, 90) direkt stoffschlüssig miteinander verbunden;
- das erste Segment (32) ist mit einer ersten Stufe (46) versehen und das zweite Segment (34) ist mit einer zweiten Stufe (48) versehen, welche an die erste Stufe (46) angepasst ist, und das erste Segment (32) und das zweite Segment (34) sind an der ersten Stufe (46) und der zweiten Stufe (48) stoffschlüssig miteinander verbunden;
- das erste Segment (32) ist mit einem Teilbereich (60) in das zweite Segment (34) eingetaucht oder das zweite Segment (34) ist mit einem Teilbereich in das erste Segment (32) eingetaucht.

7. Faserkeramik-Düse nach einem der vorangehenden Ansprüche, **dadurch gekennzeichnet, dass** die Fügeverbindungseinrichtung (70; 106) mindestens ein Fügeelement (92; 108; 140; 162) umfasst, welches ein von dem ersten Segment (66; 100) und dem zweiten Segment (68; 102) getrenntes Element ist, welches stoffschlüssig mit dem ersten Segment (66; 100) verbunden ist und welches stoffschlüssig mit dem zweiten Segment (68; 102) verbunden ist, wobei insbesondere das erste Segment (66; 100) und das zweite Segment (68; 102) zusätzlich über jeweilige Fügeflächen (84, 90) direkt stoffschlüssig miteinander verbunden sind,
und insbesondere **dadurch gekennzeichnet, dass** das mindestens eine Fügeelement (92; 108; 140; 162) zur Kooperation mit entsprechenden Fügeflächen des ersten Segments (66; 100) und des zweiten Segments (68; 102) jeweils mindestens eine Fügeelement-Fügefläche (94, 96; 134) aufweist.

8. Faserkeramik-Düse nach Anspruch 7, **gekennzeichnet durch** mindestens eines der Folgenden:
- das mindestens eine Fügeelement (92; 108; 140; 162) ist ein Ringelement;
- das mindestens eine Fügeelement (92; 108; 140; 162) ist aus einem keramischen Faserverbundwerkstoff hergestellt;
- das mindestens eine Fügeelement (92; 108) ist formschlüssig mit dem ersten Segment (66; 100) und/oder dem zweiten Segment (68; 102) verbunden, wobei insbesondere ein Formschluss quer zu einer Hauptströmungsrichtung im Betrieb der Faserkeramik-Düse orientiert ist;
- das mindestens eine Fügeelement (92; 108; 140; 162) weist einen gleichen oder unterschiedlichen Keramikanteil zu dem ersten Segment (66; 100) und/oder dem zweiten Segment (68; 102) auf;
- das mindestens eine Fügeelement (108) ist an einer Düseninnenseite (110) angeordnet, insbesondere mit mindestens einem der Folgenden:
- das mindestens eine Fügeelement (108) ist an einem Übergang von einem konvergenten Düsenbereich zu einem divergenten Düsenbereich angeordnet;
- das mindestens eine Fügeelement (108) bildet einen Übergang von einem konvergenten Düsenbereich zu einem divergenten Düsenbereich an der Düseninnenseite (110);
- das mindestens eine Fügeelement (108) ist an der Düseninnenseite (110) gekrümmt ausgebildet und ein Übergang zu dem ersten Segment (100) ist glatt und ein Übergang zu dem zweiten Segment (102) ist glatt;
- eine erste Fügefläche (112) des ersten Segments (100) und eine erste Fügefläche (116) des zweiten Segments (102) sind fluchtend ausgerichtet und das mindestens eine Fügeelement (108) ist mittels einer durchgehenden Fügeelement-Fügefläche (120) stoffschlüssig mit dem ersten Segment (100) an der ersten Fügefläche (112) des ersten Segments (100) und mit dem zweiten Segment (102) an der ersten Fügefläche (116) des zweiten Segments (102) verbunden;
- das mindestens eine Fügeelement (108) ist aus einem Keramikmaterial hergestellt, welches einen höheren Keramikgehalt aufweist als das Material des ersten Segments (100) und/oder das Material des zweiten Segments (102).

9. Faserkeramik-Düse nach Anspruch 8, **dadurch gekennzeichnet, dass** das mindestens eine Fügeelement (108) eine erste Fügeelement-Fügefläche (120) aufweist, eine zweite Fügeelement-Fügefläche (134) aufweist, und eine dritte Fügeelement-Fügefläche aufweist, wobei die erste Fügeelement-Fügefläche (120) zwischen der zweiten Fügeelement-Fügefläche (134) und der dritten Fügeelement-Fügefläche liegt, die zweite Fügeelement-Fügefläche (134) quer zu der ersten Fügeelement-Fügefläche (120) angeordnet ist, und die dritte Fügeelement-Fügefläche quer zu der ersten Fügeelement-Fügefläche (120) orientiert ist, insbesondere mit mindestens einem der Folgenden:
- das mindestens eine Fügeelement (108) ist über die erste Fügeelement-Fügefläche (120) mit dem ersten Segment (100) und dem zweiten Segment (102) stoffschlüssig verbunden;
- das mindestens eine Fügeelement (108) ist an der zweiten Fügeelement-Fügefläche (134) mit dem ersten Segment (100) stoffschlüssig verbunden;
- das mindestens eine Fügeelement (108) ist an der dritten Fügeelement-Fügefläche mit dem zweiten Segment (102) stoffschlüssig verbunden;
- die zweite Fügeelement-Fügefläche (134) und die dritte Fügeelement-Fügefläche sind parallel zueinander;
- mittels der zweiten Fügeelement-Fügefläche (134) und der dritten Fügeelement-Fügefläche wird ein Formschluss bereitgestellt.

10. Faserkeramik-Düse nach einem der Ansprüche 8 bis 9, **dadurch gekennzeichnet, dass** das mindestens eine Fügeelement (92; 140; 162) an einer Düsenaußenseite (138; 164) angeordnet ist, insbesondere mit mindestens einem der Folgenden:
- das mindestens eine Fügeelement (92; 140; 162) ist an einer Fügeelement-Fügefläche mit dem ersten Segment (66; 100) und dem zweiten Segment (68; 102) stoffschlüssig verbunden;
- das mindestens eine Fügeelement (140) ist über einen ersten Bereich (150) mit dem ersten Segment (32) verbunden und ist über einen zweiten Bereich (154) mit dem zweiten Segment (34) verbunden, und das mindestens eine Fügeelement (140) ist beabstandet zu einem Übergang zwischen dem ersten Segment (32) und dem zweiten Segment (34) an der Düsenaußenseite (138).

11. Faserkeramik-Düse nach einem der vorangehenden Ansprüche, **gekennzeichnet durch** mindestens eines der Folgenden:
- das erste Segment (32; 66; 100) und das zweite Segment (34; 68; 102) sind für den Betrieb der Faserkeramik-Düse funktionell unterschiedliche Bereiche;
- das erste Segment (32; 66; 100) ist ein Konussegment oder weist einen Konusbereich auf und weist insbesondere einen einzigen Konus auf;
- das zweite Segment (34; 68; 102) ist ein Konussegment oder weist einen Konusbereich auf und weist insbesondere einen einzigen Konus auf;
- das erste Segment (32; 66; 100) und das zweite Segment (34; 68; 102) weisen unterschiedliche Konuswinkel auf;
- das erste Segment (32) weist einen Zylinderbereich am Übergang zum zweiten Segment (34) auf;
- das zweite Segment (34) weist einen Zylinderbereich am Übergang zu dem ersten Segment (32) auf;
- das erste Segment (32; 66; 100) weist einen konvergenten Düsenbereich auf und das zweite Segment (34; 68; 102) weist einen divergenten Düsenbereich auf, oder das erste Segment (32; 66; 100) weist einen divergenten Düsenbereich auf und das zweite Segment (34; 68; 102) weist einen konvergenten Düsenbereich auf;
- das erste Segment (32; 66; 100) ist aus einem einteiligen C-Vorkörper hergestellt;
- das zweite Segment (34; 68; 102) ist aus einem einteiligen C-Vorkörper hergestellt;
- das erste Segment (32; 66; 100) ist aus einem faserverstärkten SiC-Material hergestellt, wobei insbesondere die Faserverstärkung Kohlenstofffasern und/oder SiC-Fasern sind, wobei insbesondere das erste Segment aus C/C-SiC oder SiC-SiC hergestellt ist;
- das zweite Segment (34; 68; 102) ist aus einem faserverstärkten SiC-Material hergestellt, wobei insbesondere die Faserverstärkung Kohlenstofffasern und/oder SiC-Fasern sind, wobei insbesondere das zweite Segment aus C/C-SiC oder SiC-SiC hergestellt ist;
- es ist mindestens ein Fügeelement (92; 108; 140; 162) vorgesehen, welches aus einem faserverstärkten SiC-Material hergestellt ist, wobei insbesondere die Faserverstärkung Kohlenstofffasern und/oder SiC-Fasern sind, wobei insbesondere das zweite Segment (34; 68; 102) aus C/C-SiC oder SiC-SiC hergestellt ist;
- es ist mindestens ein Einsatz vorgesehen, welcher aus einem Material hergestellt ist, dessen Schmelztemperatur größer ist als die Schmelztemperatur von Silicium.

12. Faserkeramik-Düse nach einem der vorangehenden Ansprüche, **dadurch gekennzeichnet, dass** die Faserverstärkung über Kurzfasern hergestellt ist, welche insbesondere eine Länge im Bereich zwischen 2 mm und 40 mm aufweisen, und/oder Gewebeabschnitte umfasst, welche eine Seitenlänge im Bereich zwischen 2 mm und 40 mm und insbesondere im Bereich zwischen 10 mm und 20 mm aufweisen.

13. Verwendung der Faserkeramik-Düse gemäß einem der vorangehenden Ansprüche an einer Brennkammer und insbesondere Faserkeramik-Brennkammer und/oder für einen Raketenantrieb.

14. Verfahren zur Herstellung einer Faserkeramik-Düse (30; 64; 98; 124; 136; 160), welche ein erstes Segment (32; 66; 100) und ein zweites Segment (34; 68; 102) aufweist, bei dem für das erste Segment (32; 66; 100) ein erster C-Vorkörper mit einem Fügebereich hergestellt wird, für das zweite Segment (34; 68; 102) ein zweiter C-Vorkörper mit einem Fügebereich hergestellt wird, wobei der zweite C-Vorkörper getrennt von dem ersten C-Vorkörper hergestellt wird, der erste C-Vorkörper und der zweite C-Vorkörper über die Fügebereiche verbunden werden, und eine Keramisierung der Kombination durchgeführt wird.

15. Verfahren nach Anspruch 18, **dadurch gekennzeichnet, dass** mindestens ein Fügeelement (92; 108; 140; 162) als dritter C-Vorkörper mit einem Fügebereich hergestellt wird, wobei getrennt von dem ersten C-Vorkörper und getrennt von dem zweiten C-Vorkörper ist, der mindestens eine dritte C-Vorkörper mit dem ersten C-Vorkörper und dem zweiten C-Vorkörper über Fügepaste verbunden wird, und dass eine Keramisierung der Kombination aus erstem C-Vorkörper, zweitem C-Vorkörper und mindestens einem dritten C-Vorkörper durchgeführt wird.

16. Schubkammer, umfassend eine Faserkeramik-Düse (10) gemäß einem der Ansprüche 1 bis 12 und eine Brennkammer (172), welche mit der Faserkeramik-Düse (10) verbunden ist, wobei insbesondere die Brennkammer (172) eine Faserkeramik-Brennkammer ist.
